# EUROPEAN PATENT SPECIFICATION

(11) **EP 4 248 508 B1**
(45) Date of publication and mention of the grant of the patent: **08.01.2025**
(21) Application number: 21815626.3
(22) Date of filing: 16.11.2021
(51) Int. Cl.: H01M 8/0267, H01M 8/0202, H01M 8/04014, H01M 8/04029, H01M 8/10

(54) **A FUEL CELL AND METHODS OF DECOUPLING REACTANT AND COOLANT FLUID FLOW IN A FUEL CELL**
BRENNSTOFFZELLE UND VERFAHREN ZUR ENTKOPPLUNG DES REAKTANDEN UND DES KÜHLMITTELSTROMS IN EINER BRENNSTOFFZELLE
PILE À COMBUSTIBLE ET PROCÉDÉS DE DÉCOUPLAGE DE L'ÉCOULEMENT DU FLUIDE RÉACTIF ET DU FLUIDE DE REFROIDISSEMENT DANS UNE PILE À COMBUSTIBLE

(30) Priority: 17.11.2020 GB 202018069; 22.06.2021 GB 202108940
(43) Date of publication of application: 27.09.2023
(73) Proprietor: Bramble Energy Limited, Crawley RH11 9BP (GB)
(72) Inventor: MASON, Thomas James, Crawley, RH11 9BP (GB); ENGEBRETSEN, Erik Charles, Crawley, RH11 9BP (GB)
(74) Representative: TLIP Limited
(86) International application number: PCT/GB2021/052967
(87) International publication number: WO 2022/106818

(56) References cited:
- EP-A1- 2 618 413
- US-A1- 2004 023 089
- US-A1- 2006 240 308
- US-A1- 2012 070 759
- US-A1- 2018 233 765

## Description

The present disclosure relates to fuel cells and methods of decoupling reactant and coolant fluid flow in a fuel cell.

### BACKGROUND

A fuel cell (e.g. a solid-polymer-electrolyte fuel cell) is an electrochemical device which generates electrical energy and heat from a reactant or oxidant (e.g. pure oxygen or air) and a fuel (e.g. hydrogen or a hydrogen-containing mixture, or a hydrocarbon or hydrocarbon derivative). Fuel cell technology finds application in stationary and mobile applications, such as power stations, vehicles and laptop computers.

Typically, a fuel cell comprises two electrodes, an anode and a cathode, separated by an electrolyte membrane that allows ions (e.g. hydrogen ions), but not free electrons, to pass through from one electrode to the other. A catalyst on the electrodes accelerates a reaction with the fuel on the anode to separate electrons and protons/cations, and oxidant on the cathode to undergo a reduction reaction to water. A circuit can then be formed between the anode and the cathode generate a current to power e.g. an electrical device. A reactant fluid, e.g. oxygen or reactant air, is supplied to the cathode and a fuel, e.g. hydrogen, is supplied to the anodes.

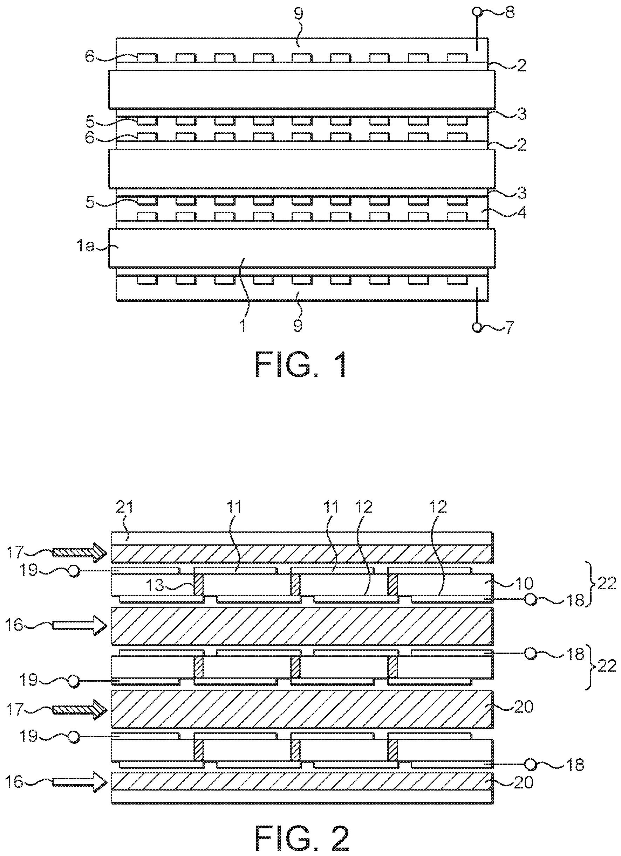

A single pair of electrodes separated by an electrolyte membrane is called a membrane electrode assembly (MEA) or a fuel cell board. A fuel cell MEA operating under a moderate load produces an output voltage of about 0.7V, which is often too low for many practical considerations. In order to increase this voltage, MEAs are assembled into a stack as shown in FIG. 1. Each MEA 1 has a layer of electrolyte membrane 1a (such as a Nafion^{™} membrane), which comprises an ion-permeable membrane sandwiched between two electrolyte layers, and an anode 2 and a cathode 3 on either side of the electrolyte membrane. Adjacent MEAs can be separated by an electrically conducting bipolar separator plate 4, and a fuel 6 (e.g. hydrogen) and an oxidant 5 (e.g. oxygen gas or 'reactant air') flow through the channels provided on opposing sides of the bipolar plate. End plates 9 are connected to an external circuit via an electrical connector 7, 8. The number of these MEAs in a stack in a fuel cell determines the total voltage, and the surface area of each membrane electrode determines the total current. Catalyst layers adjacent to the electrodes increase the rate of and efficiency of the reactions at the electrodes

There are a number of factors that determine the performance of a fuel cell. Maintaining the correct water content in the electrolyte membrane is essential to optimising a fuel cell's performance. The membrane requires a certain level of moisture to operate and conduct the ionic current efficiently so that the fuel cell current does not drop. Water produced by the cell is removed by the flow of gas along the cathode or wicked away.

Overheating of the fuel cell stack can also cause problems and cooling is often required. This is generally achieved by supplying a coolant fluid (e.g. air or water) that circulates within the stack. In addition, a reactant fluid (e.g. oxygen or reactant air) is required by the cathodes to maintain a reaction. In the prior art set ups (see e.g. WO 2012/117035), the coolant and reactant fluids are supplied to the cathode in the same channel or flow.

Conventionally, a fuel cell is stacked in a bipolar configuration wherein the anode of one MEA opposes or faces the cathode of an adjacent MEA, and a bipolar separator plate is provided between the two MEAs to conduct the current from the anode of one MEA to the cathode of the adjacent MEA, such that the electrical current flows perpendicular to the plane of the MEAs. In such a bipolar configuration, since the anode of an MEA faces the cathode of an adjacent MEA, the coolant fluid is typically circulated within the fuel cell in combination with the reactant fluid in order to supply reactant to the cathodes and remove excess heat from within the fuel cell.

However, a coolant flow generally needs a higher flow rate in comparison to a reactant flow, and a combined flow removes required moisture from the cathodes, causing a reduction in the conductivity of ionic pathways and reducing fuel cell efficiency.

US2004/023089 describes a fuel cell system comprising a plurality of individual polymer electrolyte membrane fuel cells arranged one above the other in the form of a stack. US2012/070759 describes fuel cells in the form of a fuel cell stack, the fuel cell stack including a plurality of fuel cells and coolant flow paths arranged to cool down the anodes and the cathodes of the fuel cells. EP2618413 describes a separator for fuel cell, a fuel cell, and a method of manufacturing a fuel cell. US2006/240308 describes humidification and cooling of a fuel cell power system, and, in particular, to an apparatus and method for the integrated humidification and cooling of a fuel cell.

In view of the foregoing, it is desirable to provide improved fuel cells, fuel cell stacks, fuel cell designs and uses of these fuel cells.

### SUMMARY

A fuel cell is the first aspect of the present invention and is provided in claim 1. A method of decoupling coolant fluid flow in a fuel cell is the second aspect of the present invention and is provided in claim 10. Preferred embodiments are provided in the dependent claims.

The first aspect of the invention provides a fuel cell comprising: a plurality of fuel cell boards, each fuel cell board comprising at least one ion permeable membrane, at least one anode and at least one cathode, the at least one anode and the at least one cathode arranged on opposite surfaces of the at least one ion permeable membrane, the plurality of fuel cell boards are arranged such that the first surface of each fuel cell board faces the first surface of an adjacent fuel cell board, and the second surface of each fuel cell board faces the second surface of an adjacent fuel cell board; a plurality of first fluid paths arranged to supply a coolant fluid to the plurality of fuel cell boards, wherein the plurality of fluid paths are arranged between the first surfaces of an adjacent fuel cell boards such that the coolant fluid is substantially directed only to the at least one anode of the fuel cell boards; a plurality of second fluid paths arranged to supply a reactant fluid to the plurality of fuel cell boards, wherein the plurality of second fluid paths are arranged between the second surfaces of adjacent fuel cell boards such that the reactant fluid is substantially directed only to at least one cathode of the fuel cell boards. The coolant fluid is air.

At least one coolant fluid path (first fluid path) is arranged only adjacent the anode side of the fuel cell board such that coolant fluid is directed only to the anode. In doing so, coolant fluid is not directed to the cathode which would otherwise remove moisture from the cathode. Thus, humidity at the cathode can be maintained at a desired level in order to hydrate the electrolyte and maintain fuel cell efficiency. Fully decoupled air flows means the use of separate inlets, outlets, and no mixing of reactant and cooling fluids in a fuel cell stack.

By arranging the first fluid path only adjacent the anode side of the fuel cell board and arranging the second fluid path adjacent the cathode side of the fuel cell board, the coolant fluid flow is decoupled from the reactant fluid flow. In doing so, the coolant fluid flow may
be controlled independently of the reactant fluid flow to have different flow rate, pressure, and/or composition as desired.

In some embodiments, the at least one fuel cell board may comprise at least one electrical connector configured to connect the at least one anode to the at least one cathode through the at least one ion permeable membrane. Connecting the anode to the cathode with the electrical connector through the ion permeable membrane allows an electrical current to flow in a direction along the plane of the membrane. In some embodiments, at least one through-membrane electrical connector may connect the electrodes across the membrane in a region where an anode and a cathode at least partially overlap, and the at least one through-membrane electrical connector may for example be produced by a homogeneous chemical deposition process.

In some embodiments, the or each fuel cell board may comprise a plurality of anodes and a plurality of cathodes arranged in pairs, and a plurality of electrical connectors configured to connect adjacent pairs of anodes and cathodes through the at least one ion permeable membrane. By providing a fuel cell board with a plurality of anode-cathode pairs, the total output voltage of the fuel cell board is increased.

The fuel cell includes a plurality of fuel cell boards and a plurality of first fluid paths. For each fuel cell board, the or each anode is disposed on a first surface of the at least one ion permeable membrane and the or each cathode is disposed on a second surface of the at least one ion permeable membrane opposite the first surface. The plurality of fuel cell boards are arranged such that the first surface of each fuel cell board faces the first surface of an adjacent fuel cell board, and the second surface of each fuel cell board faces the second surface of an adjacent fuel cell board. The plurality of first fluid paths are arranged only between the first surfaces of adjacent fuel cell boards. By stacking a plurality of fuel cell boards, the total output voltage of the fuel cell is increased proportionately. Moreover, by arranging the fuel cell boards such that the anode side of a fuel cell board faces the anode side of an adjacent fuel cell board, it is possible to arrange a coolant fluid path to direct coolant only to the space between the anodes.

The fuel cell further comprises a plurality of second fluid paths arranged to supply a reactant fluid to the plurality of fuel cell boards. The plurality of second fluid paths is arranged only between the second surfaces of adjacent fuel cell boards such that the reactant fluid is substantially directed to the plurality of cathodes. By arranging the fuel cell boards such that the cathode side of a fuel cell board faces the cathode side of an adjacent fuel cell board, it is possible to arrange a reactant fluid path to direct reactant to the space between the cathodes. Present arrangement therefore enables the coolant fluid flow to be decoupled from the reactant fluid flow.

In some embodiments, the plurality of second fluid paths may be arranged to direct the reactant fluid in a direction substantially perpendicular to a direction in which the plurality of first fluid paths direct the coolant fluid. It is therefore possible to further decouple the effects of the coolant fluid flow from the reactant fluid flow.

In some embodiments, the plurality of second fluid paths can be arranged to direct the reactant fluid into the fuel cell board in a direction substantially opposite to the direction in which the plurality of first fluid paths direct the coolant fluid into the fuel cell board. The first fluid paths can be arranged so that after input of the coolant fluid into the fuel cell board the coolant fluid leaves the fuel cell board in at least one direction substantially perpendicular to the direction it was directed into the fuel cell board. The second fluid paths can be arranged so that after input of the reactant fluid into the fuel cell board the reactant fluid leaves the fuel cell board in at least one direction substantially perpendicular to the direction it was directed into the fuel cell board. The first fluid paths can also be arranged so that after input of the coolant fluid to the fuel cell board the coolant fluid leaves the fuel cell board in two different directions, both directions substantially perpendicular to the direction the coolant fluid was directed into the fuel cell board. The second fluid paths can also be arranged so that after input of the reactant fluid to the fuel cell board the reactant fluid leaves the fuel cell board in two different directions, both directions substantially perpendicular to the direction the reactant fluid was directed into the fuel cell board.

In some embodiments, the plurality of second fluid paths can be arranged to direct the reactant fluid into the fuel cell board in a direction substantially opposite to the direction in which the plurality of first fluid paths direct the coolant fluid into the fuel cell board. The first fluid paths can be arranged so that after input of the coolant fluid into the fuel cell board the coolant fluid leaves the fuel cell board in at least one direction substantially opposite to the direction it was directed into the fuel cell board. The second fluid paths can be arranged so that after input of the reactant fluid into the fuel cell board the reactant fluid leaves the fuel cell board in at least one direction substantially opposite to the direction it was directed into the fuel cell board. The first fluid paths can be arranged to direct the coolant fluid into the fuel cell board from a first side of the fuel cell board towards a second side of the fuel cell board opposite the first side and return the coolant fluid to the first side to exit the fuel cell board from the same first side. Fluid output and input is on the same side of the board/fuel cell stack. In some embodiments, one or more of the first fluid paths and/or the second fluid paths are arranged to direct the coolant and/or the reactant fluid into the fuel cell board from a first side of the fuel cell board and to direct the coolant and/or the reactant fluid out a second side of the fuel cell board opposite the first side of the fuel cell board.

In some embodiments, one or more of both the first and second fluid paths can input the fluid into the fuel cell board at a single central point of a first side of one or more of the fuel cell boards, and the fluid will flow to leave or output from the fuel cell board at two points substantially not at the centre (non-central), two points peripheral to the central input point or at the two non-input sides of the first/same side of this fuel cell board. This output flow is in a direction that is substantially opposite to the input flow direction. Fluid output and input is on the same side of the board/fuel cell stack. Preferably, this arrangement is applied to the second fluid paths for reactant fluid.

In some embodiments, one or more of both the first and second fluid paths can input the fluid into the fuel cell board at a two peripheral, non-central or side points of a first side of one or more of the fuel cell boards and the fluid will flow to leave or output from the fuel cell board at a single central point of a first side of this fuel cell board. This flow is in a direction that is substantially opposite to the direction it was directed into the fuel cell board. Fluid output and input is on the same side of the board/fuel cell stack. Preferably, this arrangement is applied to the second fluid paths for reactant fluid.

In some embodiments, one or more of the first or the second fluid paths is directly across the fuel cell board, where fluid enters and leaves opposite sides of the board, where fluid enters and leaves the fuel cell boards in substantially the same direction. This "linear" flow is directly from one side of the stack/fuel cell to the other side of the stack/fuel cell. This could be along a long or a short side of a fuel cell board when rectangular fuel cell boards are considered. Preferentially if the fuel cell boards are rectangular, then such a flow is perpendicular to the short size, i.e. input and output is in and out of the long side of the fuel cell board. This applies to any such linear flow as described herein. Here the first fluid path is still separate from the second fluid path and input is from a different side of the fuel cell board or fuel cell stack. In other words, in some embodiments, the first fluid paths and/or the second fluid paths are arranged to direct the coolant fluid into the fuel cell board from a first side of the fuel cell board (input) and to direct the coolant fluid out a second side of the fuel cell board opposite the first side of the fuel cell board (output). In these embodiments, if the first fluid path is direct across then the second fluid path can be any one of the second fluid paths described herein. In these embodiments, if the second fluid path is direct across then the first fluid path can be any one of the first fluid paths described herein.

Preferably in some embodiments, one or more of the first fluid paths are arranged to direct the coolant fluid into the fuel cell board from a first side of the fuel cell board and to direct the coolant fluid out a second side of the fuel cell board opposite the first side of the fuel cell board, and one or more of the second fluid paths is arranged to input the reactant fluid into the fuel cell board at a two peripheral, non-central or side points of a first side of the fuel cell and the fluid will flow to leave or output from the fuel cell board at a single central point on the same first side of the fuel cell board, output direction is substantially opposite to the direction input direction.

In some embodiments, the plurality of second fluid paths are arranged to direct the reactant fluid into the fuel cell board in a direction substantially the same as the direction in which the plurality of first fluid paths direct the coolant fluid into the fuel cell board. The first fluid paths can be arranged so that after input of the coolant fluid into the fuel cell board the coolant fluid leaves the fuel cell board in at least one direction substantially the same as the direction it is directed into the fuel cell board. The second fluid paths can be arranged so that after input of the reactant fluid into the fuel cell board the reactant fluid leaves the fuel cell board in at least one direction substantially opposite to the direction it was directed into the fuel cell board.

In some embodiments, the plurality of second fluid paths are arranged to direct the reactant fluid into the fuel cell board in a direction opposite to the direction in which the plurality of first fluid paths direct the coolant fluid into the fuel cell board. The first fluid paths can be arranged so that after input of the coolant fluid into the fuel cell board the coolant fluid leaves the fuel cell board in at least one direction substantially the same as the direction it is directed into the fuel cell board. The second fluid paths can be arranged so that after input of the reactant fluid into the fuel cell board the reactant fluid leaves the fuel cell board in at least one direction substantially perpendicular or substantially opposite to the direction it was directed into the fuel cell board, which is the same direction as the output of the coolant fluid. The output from fuel cell boards can be a common or shared output or exhaust in these embodiments.

In some embodiments described here, the first fluid path of any or another embodiment can be combined with the second fluid path of any or another embodiment. This allows combination of different types of fluid paths, which is another advantage of the present inventions, allowing different flow path types for fluids directed to the anodes and fluids directed to the cathodes.

In some embodiments input to the first and second fluids paths can be separate, but they may share a common output or exhaust. Exhaust from the fuel cell or fuel cell boards for first and second fluids paths may be combined for efficient and compressed fuel cell design.

In some embodiments, fan cowls direct the air, in, out and/or across the stacks.

In any of the embodiments described herein, fluid flow may be directed or flow controlled by one or more further means to direct or control fluid flow. These direct the flow of the fluid in a manner desired across the stack or across the fuel cell boards, or to direct or control fluid flow across fuel cell boards, to cathodes to anodes. This aids in distribution of the reactant/coolant fluids to the cathodes/anodes. These means may be physical means to block, baffle or direct fluid flow. These may be inserts or baffles.

In some embodiments the means to direct fluid flow are attached to the fan cowls. In some embodiments the means to direct fluid flow are non-conductive. In some embodiments the means to direct fluid flow are plastic or plastic inserts.

In some embodiments the means to direct fluid flow comprises two or more substantially curved or substantially U shaped plastic inserts, preferably two substantially curved or substantially U shaped plastic inserts with one of the inserts larger than the other inserts. Preferably these can direct fluid to input on one side or half of the fuel cell board, direct fluid to flow across substantially all of the surface area of the board, and these then direct the fluid to output the other side or other half of the board. Fluid can flow out of the board (output) in substantially the opposite direct by which it was inputted into the board. Or fluid can flow out of the board (output) in substantially the same direction by which it was inputted into the board. Preferably fluid flows out the same direction it was inputted to the board, taking a U-shaped flow path across the board.

In some embodiments fluid flow may take any other path, for example serpentine, circular flow or direct/linear flow.

In some embodiments, the fuel cell may further comprise a plurality of spacers disposed between adjacent fuel cell boards. Optionally, one or more spacers may be configured with an integrated coolant conduit defining the at least one first fluid path. Additionally or alternatively, one or more spacers may be configured with an integrated reactant conduit defining at least one second fluid path for supplying a reactant fluid to the at least one fuel cell board. Additionally or alternatively, one or more spacers may be configured without integrated conduits, but so that fluid flow is directed in the desired direction, for example by having entry and exit points so that pressurised air enters or leaves the spacers in the desired directions (e.g. perpendicular to entry). The spacers can have fluid entry and/or exit points to direct the first and/or second fluid paths. In some embodiments spacers may comprise means to direct fluids paths.

In some embodiments, the or each fuel cell board of the fuel cell may comprise a multilayer Printed Circuit Board, PCB. Optionally, the at least one anode and the at least one cathode may be printed on opposite surfaces of the at least one ion permeable membrane, and the at least one ion permeable membrane of the or each fuel cell board may be bonded to the multilayer PCB.

In some embodiments the fuel cell further comprises fluid inlets and fluid outlets, to allow fuels to enter and leave fuel cell boards and/or the fuel cells. The inlets and the outlets are separate so there is no mixing of reactant and cooling fluids in a fuel cell stack.

In some embodiments, the rate of flow of the coolant fluids is higher than the rate of reactant fluid. This is preferably when operating at temperatures above 5 °C.

An aspect described herein provides a spacer. In some embodiments the spacers may comprise a multilayer Printed Circuit Board, PCB material. They may be copper plated in at least part to allow conduction of current through a fuel cell stack. In some embodiments spacers are PCB frames which allow the first, second or other fluid paths to flow over the fuel cell boards, acting as means to ensure that the flow is directed over the board. In some embodiments spacers comprise plated through holes.

Another aspect of preferred embodiments provides a method of decoupling coolant fluid flow in a fuel cell, comprising: providing a plurality of fuel cell boards, each fuel cell board comprising at least one ion permeable membrane, at least one anode and at least one cathode, the at least one anode and the at least one cathode arranged on opposite surfaces of the at least one ion permeable membrane; arranging the plurality of fuel cell boards such that the first surface of each fuel cell board faces the first surface of an adjacent fuel cell board, and the second surface of each fuel cell board faces the second surface of an adjacent fuel cell board; arranging a plurality of first fluid paths between the first surfaces of adjacent fuel cell boards for supplying a coolant fluid to the at least one anode of each of the plurality of fuel cell boards, such that the coolant fluid is substantially directed only to the at least one anode of the at least one fuel cell board; arranging a plurality of second fluid paths between the second surfaces of adjacent fuel cell boards, for supplying a reactant fluid to the at least one cathode of each of the plurality of fuel cell boards, such that the reactant fluid is substantially directed only to the at least one cathode of the fuel cell boards. The coolant fluid is air. The method may utilise the fuel cell or fuel cell boards as described herein.

In some embodiments, the plurality of second fluid paths are arranged to direct the reactant fluid in a direction substantially perpendicular to a direction in which the plurality of first fluid paths direct the coolant fluid.

In some embodiments, the plurality of second fluid paths are arranged to direct the reactant fluid into the fuel cell board in a direction substantially opposite to the direction in which the plurality of first fluid paths direct the coolant fluid into the fuel cell board. The first fluid paths are arranged so that after input of the coolant fluid into the fuel cell board the coolant fluid leaves the fuel cell board in at least one direction substantially perpendicular to the direction it was directed into the fuel cell board. The second fluid paths are arranged so that after input of the reactant fluid into the fuel cell board the reactant fluid leaves the fuel cell board in at least one direction substantially perpendicular to the direction it was directed into the fuel cell board.

In some embodiments, the first fluid paths are also arranged so that after input of the coolant fluid to the fuel cell board the coolant fluid leaves the fuel cell board two different directions, both directions substantially perpendicular to the direction the coolant fluid was directed into the fuel cell board. The second fluid paths are also arranged so that after input of the reactant fluid to the fuel cell board the reactant fluid leaves the fuel cell board two different directions, both directions substantially perpendicular to the direction the reactant fluid was directed into the fuel cell board.

In some embodiments, the plurality of second fluid paths are arranged to direct the reactant fluid into the fuel cell board in a direction substantially opposite to the direction in which the plurality of first fluid paths direct the coolant fluid into the fuel cell board. The first fluid paths are arranged so that after input of the coolant fluid into the fuel cell board the coolant fluid leaves the fuel cell board in at least one direction substantially opposite to the direction it was directed into the fuel cell board. The second fluid paths are arranged so that after input of the reactant fluid into the fuel cell board the reactant fluid leaves the fuel cell board in at least one direction substantially opposite to the direction it was directed into the fuel cell board.

In some embodiments, the first fluid paths are arranged to direct the coolant fluid into the fuel cell board from a first side of the fuel cell board towards a second side of the fuel cell board opposite the first side and return the coolant fluid to the first side to exit the fuel cell board from the first side.

In some embodiments, one or more of both the first and second fluid paths can input the fluid into the fuel cell board at a single central point of a first side of one or more of the fuel cell boards, and the fluid will flow to leave or output from the fuel cell board at two points substantially not at the centre (non-central), two points peripheral to the central input point or at the two non-input sides of the first/same side of this fuel cell board. This output flow is in a direction that is substantially opposite to the input flow direction. Fluid output and input is on the same side of the board/fuel cell stack. Preferably, this arrangement is applied to the second fluid paths for reactant fluid.

In some embodiments, one or more of both the first and second fluid paths can input the fluid into the fuel cell board at a two peripheral, non-central or side points of a first side of one or more of the fuel cell boards and the fluid will flow to leave or output from the fuel cell board at a single central point of a first side of this fuel cell board. This flow is in a direction that is substantially opposite to the direction it was directed into the fuel cell board. Fluid output and input is on the same side of the board/fuel cell stack. Preferably, this arrangement is applied to the second fluid paths for reactant fluid.

In some embodiments, one or more of the first or the second fluid paths is directly across the fuel cell board, where fluid enters and leaves opposite sides of the board, where fluid enters and leaves the fuel cell boards in substantially the same direction. This "linear" flow is directly from one side of the stack/fuel cell to the other side of the stack/fuel cell. This could be along a long or a short side of a fuel cell board when rectangular fuel cell boards are considered. Preferentially if the fuel cell boards are rectangular, then such a flow is perpendicular to the short size, i.e. input and output is in and out of the long side of the fuel cell board. This applies to any such linear flow as described herein. Here the first fluid path is still separate from the second fluid path and input is from a different side of the fuel cell board or fuel cell stack. In other words, in some embodiments, the first fluid paths and/or the second fluid paths are arranged to direct the coolant fluid into the fuel cell board from a first side of the fuel cell board (input) and to direct the coolant fluid out a second side of the fuel cell board opposite the first side of the fuel cell board (output). In these embodiments, if the first fluid path is direct across then the second fluid path can be any one of the second fluid paths described herein. In these embodiments, if the second fluid path is direct across then the first fluid path can be any one of the first fluid paths described herein.

Preferably in some embodiments, one or more of the first fluid paths are arranged to direct the coolant fluid into the fuel cell board from a first side of the fuel cell board and to direct the coolant fluid out a second side of the fuel cell board opposite the first side of the fuel cell board, and one or more of the second fluid paths is arranged to input the reactant fluid into the fuel cell board at a two peripheral, non-central or side points of a first side of the fuel cell and the fluid will flow to leave or output from the fuel cell board at a single central point on the same first side of the fuel cell board, output direction is substantially opposite to the direction input direction.

In some embodiments, the plurality of second fluid paths are arranged to direct the reactant fluid into the fuel cell board in a direction substantially the same as the direction in which the plurality of first fluid paths direct the coolant fluid into the fuel cell board. The first fluid paths can be arranged so that after input of the coolant fluid into the fuel cell board the coolant fluid leaves the fuel cell board in at least one direction substantially the same as the direction it is directed into the fuel cell board. The second fluid paths can be arranged so that after input of the reactant fluid into the fuel cell board the reactant fluid leaves the fuel cell board in at least one direction substantially opposite to the direction it was directed into the fuel cell board.

In some embodiments, the plurality of second fluid paths are arranged to direct the reactant fluid into the fuel cell board in a direction opposite to the direction in which the plurality of first fluid paths direct the coolant fluid into the fuel cell board. The first fluid paths can be arranged so that after input of the coolant fluid into the fuel cell board the coolant fluid leaves the fuel cell board in at least one direction substantially the same as the direction it is directed into the fuel cell board. The second fluid paths can be arranged so that after input of the reactant fluid into the fuel cell board the reactant fluid leaves the fuel cell board in at least one direction substantially perpendicular or substantially opposite to the direction it was directed into the fuel cell board, which is the same direction as the output of the coolant fluid. The output from fuel cell boards can be a common or shared output or exhaust in these embodiments.

In some embodiments, the first fluid path of any or another embodiment can be combined with the second fluid path of any or another embodiment. This allows combination of different types of fluid paths, which is another advantage of the present inventions, allowing different flow path types for fluids directed to the anodes and fluids directed to the cathodes.

In some embodiments input to the first and second fluids paths can be separate, but they may share a common output or exhaust. Exhaust from the fuel cell or fuel cell boards for first and second fluids paths may be combined for efficient and compressed fuel cell design.

In some embodiments, fan cowls direct the fluid, air, in, out and/or across the stacks.

In any of the embodiments described herein, fluid flow may be directed or flow controlled by one or more further means to direct or control fluid flow. These direct the flow of the fluid in a manner desired across the stack or across the fuel cell boards, or to direct or control fluid flow across fuel cell boards, to cathodes to anodes. This aids in distribution of the reactant/coolant fluids to the cathodes/anodes. These means may be physical means to block, baffle or direct fluid flow. These may be inserts or baffles.

In some embodiments the means to direct fluid flow are attached to the fan cowls. In some embodiments the means to direct fluid flow are non-conductive. In some embodiments the means to direct fluid flow are plastic or plastic inserts.

In some embodiments, the method further comprises disposing a plurality of spacers between adjacent fuel cell boards. Optionally, one or more spacers may be configured with an integrated coolant conduit defining the at least one first fluid path. Additionally or alternatively, one or more spacers may be configured with an integrated reactant conduit defining at least one second fluid path for supplying a reactant fluid to the at least one fuel cell board. Additionally or alternatively, one or more spacers may be configured without integrated conduits, but so that fluid flow is directed in the desired direction, for example by having entry and exit points so that pressurised air enters or leaves the spacers in the desired directions (e.g. perpendicular to entry). The spacers can have fluid entry and/or exit points to direct the first and/or second fluid paths. In some embodiments spacers may comprise means to direct fluids paths.

In some embodiments, the or each fuel cell board of the fuel cell may comprise a multilayer Printed Circuit Board, PCB. Optionally, the at least one anode and the at least one cathode may be printed on opposite surfaces of the at least one ion permeable membrane, and the at least one ion permeable membrane of the or each fuel cell board may be bonded to the multilayer PCB.

In some embodiments, the coolant fluid is directed at a rate higher than the reactant fluid.

A further aspect described herein provides a fuel cell comprising: a plurality of fuel cell boards, each fuel cell board comprising at least one ion permeable membrane, a plurality of anodes and a plurality of cathodes arranged in pairs, and a plurality of electrical connectors, the plurality of anodes being disposed on a first surface of the at least one ion permeable membrane and the plurality of cathodes being disposed on a second surface of the at least one ion permeable membrane opposite the first surface, wherein the plurality of electrical connectors are arranged to connect adjacent pairs of anodes and cathodes through the at least one ion permeable membrane; and a plurality of first fluid paths arranged to supply a coolant fluid to the plurality of fuel cell boards, wherein the plurality of fuel cell boards are arranged such that the first surface of each fuel cell board faces the first surface of an adjacent fuel cell board, and the second surface of each fuel cell board faces the second surface of an adjacent fuel cell board, the plurality of first fluid paths being arranged only between the first surfaces of adjacent fuel cell boards such that the coolant fluid is substantially directed only to the plurality of anodes of each fuel cell board. Any of the embodiments described earlier related to the first aspect of the invention may also be applied to this aspect of the invention.

In some embodiments, the coolant fluid is directed at a rate higher than the reactant fluid.

Aspects of the invention as described here are interchangeable and can be used with one another where combination would be permissible, for example the embodiments of the methods and fuel cells are interchangeable.

### BRIEF DESCRIPTION OF THE DRAWINGS

Embodiments of the present disclosure will now be described with reference to the accompanying drawings, in which:
FIG. 1 shows a schematic side view of a stacked fuel cell;
FIG. 2 shows a cross-section of a fuel cell comprising a stack of fuel cell boards;
FIG. 3 shows a cross-section of a fuel cell board;
FIG. 4a schematically shows coolant and reactant fluid flows in a bi-polar configuration;
FIG. 4b schematically shows coolant and reactant fluid flows according to an embodiment;
FIG. 5a shows a conventional fuel cell stack;
FIG. 5b shows a fuel cell stack according to an embodiment;
FIG. 6 shows the results of a comparison in performance between the fuel cell of FIG. 5a and the fuel cell of FIG. 5b;
FIG. 7a shows a cross-section of a spacer with channels;
FIG. 7b shows a top view of a spacer with an internal conduit;
FIG. 7c shows a fuel cell stack according to an embodiment with how the air flow enters and leaves the fuel cell shown;
FIG. 8a shows a fuel cell stack according to an embodiment;
FIG. 8b shows an alternative view of a fuel cell stack according to an embodiment;
FIG. 8c shows a fuel cell stack according to an embodiment with how the air flow enters and leaves the fuel cell shown;
FIG. 9a shows a top view of a spacer;
FIG. 9b shows a side view of a spacer;
FIG. 9c shows a top view of a spacer with the airflow shown in dotted lines;
FIG. 10a shows a fuel cell stack according to an embodiment;
FIG. 10b shows an alternative view of a fuel cell stack according to an embodiment;
FIG. 10c shows a fuel cell stack according to an embodiment with how the air flow enters and leaves the fuel cell shown;
FIG. 11a shows a top view of a spacer;
FIG. 11b shows a top view of a spacer with the airflow shown in dotted lines;
FIG. 11c shows a top view of a spacer with the airflow shown in dotted lines;
FIG. 12 shows a fuel cell stack with fan cowls;
FIG. 13 shows fan cowls and inserts to direct fluid flow across an exemplary fuel cell board; and
FIG. 14a shows a fluid velocity model and FIG. 14b shows a fluid pressure model.

### DETAIL DESCRIPTION

Embodiments will now be described in detail with reference to the accompanying drawings. In the following detailed description numerous specific details are set forth by way of examples in order to provide a thorough understanding of the relevant teachings. However, it will be apparent to one of ordinary skill in the art that the present teachings may be practiced without these specific details.

A fuel cell generally includes one or more fuel cell boards, where each fuel cell board comprises at least one ion permeable membrane, and at least one anode and at least one cathode arranged on either side of the ion permeable membrane. According to the preferred embodiments, a coolant fluid path (first fluid path) is arranged only adjacent the anode side of a fuel cell board such that coolant fluid is directed only to the anode. In other words, coolant fluid is not directed to the cathode, which would otherwise remove moisture from the cathode. Thus, humidity at the cathode can be maintained at a desired level in order to hydrate the electrolyte and maintain fuel cell efficiency.

FIG. 2 shows an exemplary fuel cell of the prior art (see e.g. WO 2012/117035) in which a plurality of fuel cell boards 22 are stacked between two endplates 21 in order to provide increased voltage and power. Electrode pairs are arranged in a series along either side of a single layer of polymer electrolyte 10, such as a Nafion^{™} membrane. Anodes 11 are disposed on one surface of these membranes and cathodes 12, separated by gaps are disposed on the other, opposite, surface of these membranes. The anode and cathode respectively of two adjacent electrode pairs may partially overlap. Through-membrane electrical connectors 13 connect the electrodes across the membrane in the overlapping region, and may be produced by a homogeneous chemical deposition process. A catalyst layer adjacent to the electrodes encourages the reactions at the electrodes. A fuel 17, such as hydrogen gas, flows along the face of the fuel cell board 22 supplying the anodes 11 and a reactant or oxidant 16, such as oxygen gas or air, flows along the surface of the fuel cell board 22 supplying the cathodes 12. One electrode at the edge of the upper surface and one electrode at another edge of the lower surface of the fuel cell board are connected to an external circuit via an electrical connection 18, 19. In this series arrangement, the surface area of an electrode pair determines the size of the current for a fuel cell board 22, but the voltage accumulates in proportion to the number of electrode pairs on that fuel cell board 22.

In this, electrically insulating spacers 20 are integrated into the stack between each of the fuel cell boards each comprising a spacer composed of electrically insulating material (such as plastic). Although the electrically insulating spacers 20 are provided, as found in the prior art they are not essential and may be omitted. The spacers 20 can incorporate a reactant distribution system as well as, optionally, comprise integrated channels or conduits associated with a cooling system for supplying a coolant fluid, and may further optionally comprise a distribution system for delivering hydration water for the membranes or extracting product water. The size of an individual cell (the surface area of a pair of electrodes) determines the size of the current for a fuel cell board. The total number of individual cells on a fuel cell board determines the voltage produced. The number of fuel cell boards in a stack determines the size of the total current of the fuel cell stack.

The spacers described in the prior art (see e.g. WO 2012/117035) nor the fuel cell stacks describe the de-coupled or separation of the reactant and coolant fluid pathways. Particularly, in the art there is no description of the separation of the reactant and coolant fluids so that the coolant is directed only to the anodes of fuel cell boards and so that the reactant is directed only to the anodes of fuel cell boards.

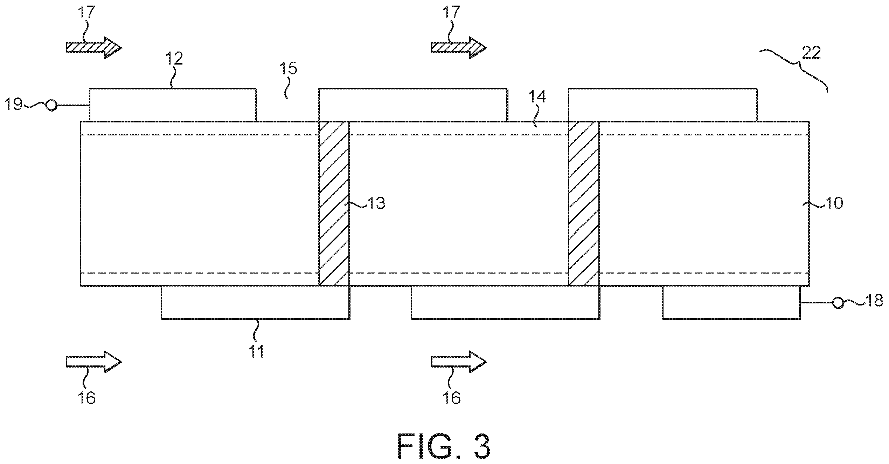

FIG. 3 shows another exemplary fuel cell board 22 wherein electrode pairs are arranged in a series along either side of a single layer of polymer electrolyte 10, such as a Nafion^{™} membrane, to form a membrane or sheet. Anodes 11, separated by gaps 15, are disposed on one surface of this membrane and cathodes 12, separated by gaps 15, are disposed on the other, opposite, surface of this membrane. The anode and cathode respectively of two adjacent electrode pairs may partially overlap. Through-membrane electrical connectors 13 connect the electrodes across the membrane in the overlapping region, and may be produced by a homogeneous chemical deposition process. A catalyst layer 14 adjacent to the electrodes encourages the reactions at the electrodes. A fuel 16, such as hydrogen gas, flows along the face of the fuel cell board 22 supporting the anodes; a reactant or oxidant 17, such as oxygen gas or air, flows along the surface of the fuel cell board supporting the cathodes. One electrode at the edge of the upper surface and one electrode at another edge of the lower surface of the fuel cell board are connected to an external circuit via an electrical connection 18, 19. In this series arrangement, the surface area of an electrode pair determines the size of the current for a fuel cell board 22, but the voltage accumulates in proportion to the number of electrode pairs on that fuel cell board 22.

The end cathodes and anodes 11 on each fuel cell board are connected to respective first and second output lines 23, 24 via electrical connections 18, 19. The connection between each fuel cell board in the stack and the second output line 24 can be controlled by a switch mechanism 25 such as a field-effect transistor (FET) switch providing power handling and control directly at the cell. Each of these switches can be controlled by individual control lines 26.

In a conventional fuel cell, current flows in a direction perpendicular to the plane of a fuel cell board, from the anode of one fuel cell board to the cathode of a next adjacent fuel board enabled by bi-polar plates disposed between adjacent fuel cell boards. As such, the fuel cell boards are stacked with the anodes of one fuel cell board facing the cathodes of an adjacent fuel cell board in an anode-cathode-anode-cathode configuration. According to present embodiments, electrical current flows in a direction along the plane of a fuel cell board enabled by the through-membrane electrical connections. There is, therefore, no requirement for electrical contact between the fuel cell boards of a stack. As such, the fuel cell boards can be stacked such that adjacent fuel cell boards have their anode sides (or cathode sides) facing or opposing each other in an anode-anode-cathode-cathode configuration.

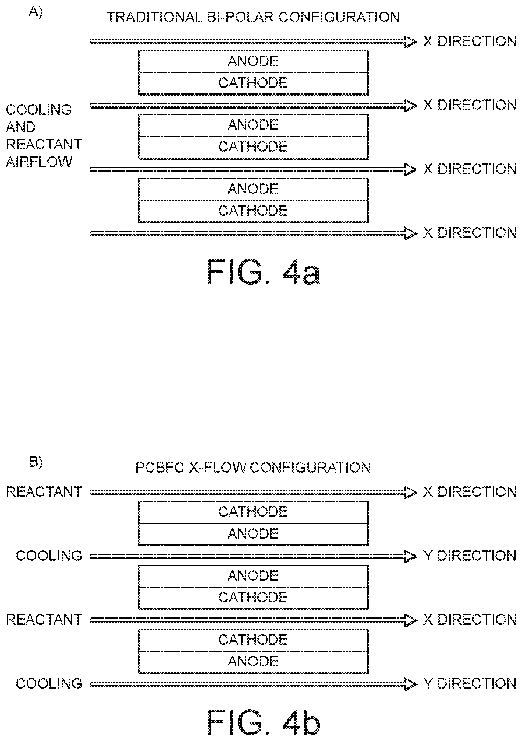

A coolant fluid flow is often required to remove excess heat from within a fuel cell stack, while a reactant fluid flow is required at the cathodes to maintain reactions. When fuel cell boards are stacked in an anode-anode-cathode-cathode configuration, a coolant fluid flow can only be circulated in combination with a reactant fluid flow, as both anodes and cathodes would lie in the space between two adjacent fuel cell boards, as shown in FIG. 4a. However, fuel cells require moisture and humidity to enable good conductivity of ionic pathways to allow them to operate efficiently. A large coolant fluid flow rates removes much of the moisture produced by the reactions in the fuel cell, which reduces fuel cell efficiency and impact the performance of the fuel cell.

In present embodiments, an anode-anode-cathode-cathode configuration enables the coolant and reactant fluid flow to be decoupled in a fuel cell. As shown in FIG. 4b, the configuration enables alternating gaps between the anodes of two adjacent fuel cell boards and the cathodes of two adjacent fuel cell boards. As such, coolant fluid can be directed only to the gaps between anodes and reactant fluid can be directed to the gaps between cathodes.

In some embodiments, the coolant fluid and the reactant fluid that flow through each of the alternating gaps can be supplied perpendicular to one another, which further decouples the effects of the coolant and reactant fluid on the fuel cell. As can be seen in FIG. 4b, the present arrangement allows fluid to be supplied from two directions (x and y). Thus, according to present embodiments, a coolant fluid flow can be supplied to the anodes in the y-direction to maintain a desired fuel cell temperature, while a reactant fluid flow can be supplied separately to the cathodes in the x-direction to maintain the reaction in the fuel cell. In doing so, the coolant fluid can be supplied at a much higher flow rate than that of the reactant fluid, such that excess heat can be removed effectively while retaining humidity around the cathodes at a desired level to maintain fuel cell efficiency. Moreover, the present arrangement is able to reduce the parasitic power requirement for the fuel cell system in a variety of operating conditions. For example, in hot conditions, the cooling requirement is lowered by the enhanced retention of water on the cathodes.

Experiments have been performed to compare the performance between a conventional fuel cell and a fuel cell according to embodiments of the present disclosure.

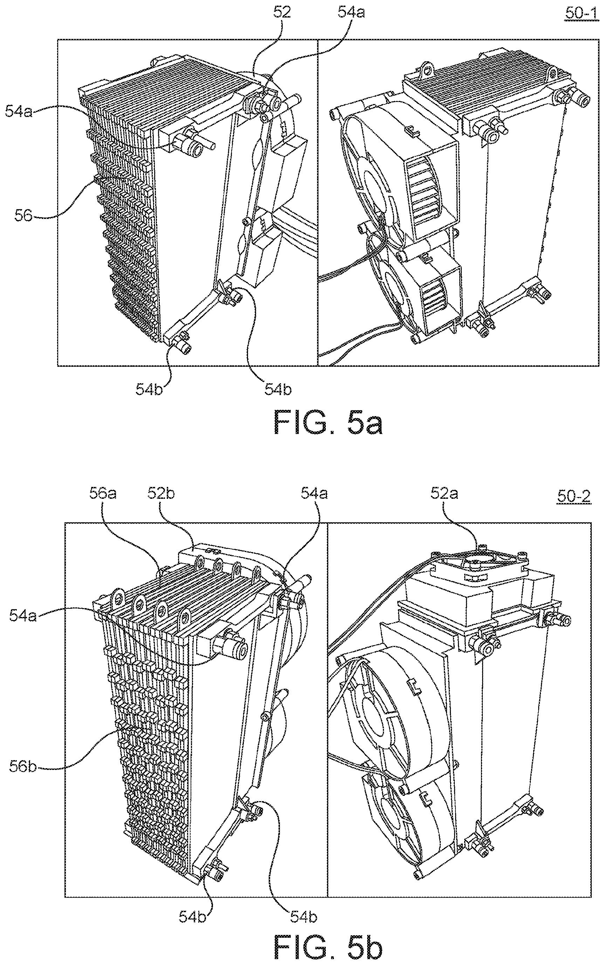

FIG. 5a shows an example of a conventional fuel cell 50-1 with an anode-cathode-anode-cathode (bi-polar) 8-module stack configuration with nine slots for air flow. 'Slot' is used herein to describe an inlet or an outlet in a fuel cell or a fuel cell board. Each module comprises 11 fuel cell boards, making an 88-cell-stack fuel cell. The fuel cell 50-1 comprises a fan 52 for directing coolant and reactant air flow into and through the eight fuel cell modules, and the air flow exits the fuel cell 50-1 through slots 56. Hydrogen fuel enters through inlets 54a and exits through outlets 54b.

FIG. 5b shows a fuel cell 50-2 according to an embodiment with an anode-anode-cathode-cathode 8-module stack configuration with five slots for cooling air flow and four slots for reactant air. Again, each module comprises 11 fuel cell boards, making an 88-cell-stack fuel cell. The fuel cell 50-2 comprises a reactant fan 52a for directing reactant air flow and a coolant fan 52b for directing coolant air flow. In the present embodiment, the reactant fan 52a and the coolant fan 52b are arranged such that the reactant air flow is orthogonal to the coolant air flow. Thus, the reactant air flow exits the fuel cell 50-2 through slots 56a, while the coolant air flow exits the fuel cell 50-2 through slots 56b. Hydrogen fuel enters through inlets 54a and exits through outlets 54b.

For the experiment, each stack of the fuel cell 50-1 and the fuel cell 50-2 was supplied with research grade hydrogen at 1.5x stoich (or a minimum flowrate of 0.1 L/min) and 0.5 bar back pressure. The stacks of each fuel cell 50-1 and 50-2 were held at each predetermined current density for ten minutes. Voltage was recorded every second, with the average of the final minute of the current density hold recorded as a data point. Temperature was controlled at 55°C measured at the external face of a central module for each fuel cell 50-1 and 50-2. Net power was measured by determining the difference between the stack output power and the power consumed by the fan 52 in the case of the fuel cell 50-1, and the difference between the stack output power and the power consumed by the reactant fan 52a and coolant fan 52b in the case of the fuel cell 50-2. Power densities were calculated as a fraction of the total active area. The same modules were used in both configurations 50-1 and 50-2.

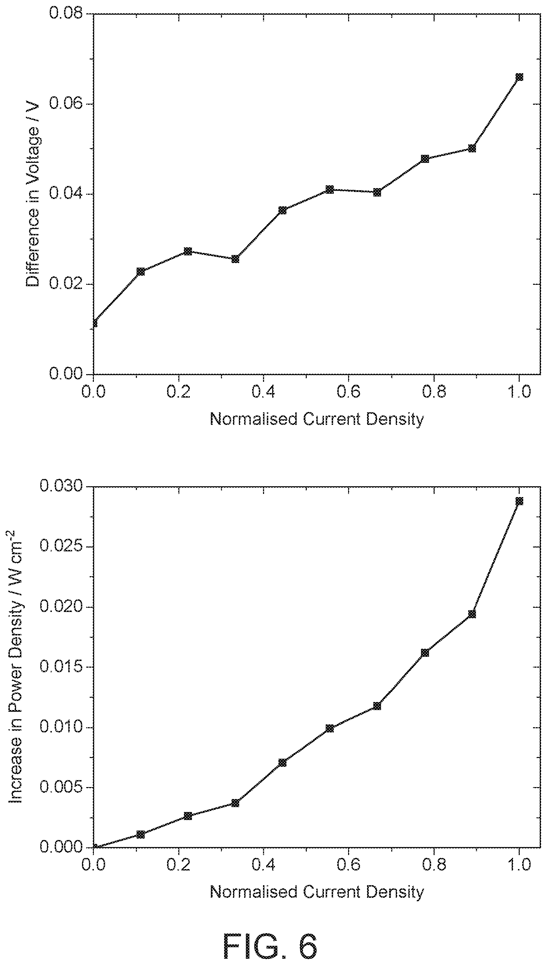

FIG. 6 shows the experimental results of the comparison, which demonstrate performance improvement when the coolant and reactant fluid flows are decoupled in the fuel cell 50-2 in comparison with a combined coolant and reactant fluid flow in the fuel cell 50-1. The top figure evaluates the improvement in voltage at different current density, and the bottom figure evaluates the improvement in power density at different current density.

As can be seen in FIG. 6, increases in performance are more prominent at higher current densities for both voltage output and power density. This is because cooling requirement increases at a much higher rate as current density increases in comparison to reactant requirement. By decoupling the coolant and reactant fluid flows, coolant flow rate to the anodes can be increased as current density increases while humidity can be maintained at the cathodes by selecting a lower reactant flow rate to the cathodes, thereby effectively removing excess heat while hydrating the electrolyte membrane to maintain fuel cell performance.

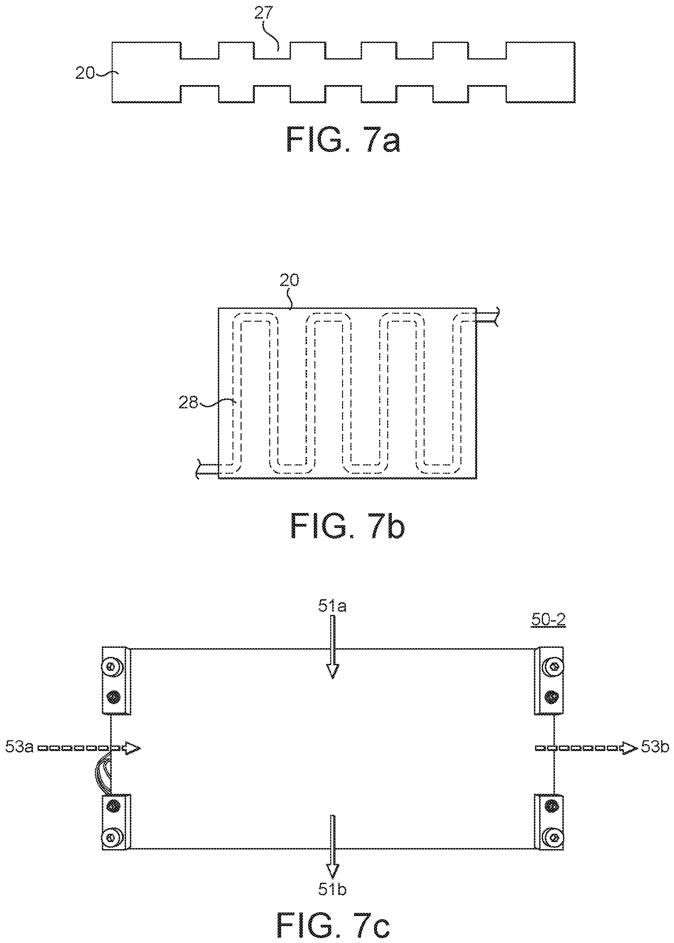

In some embodiments, spacers 20 may be provided between adjacent fuel cell boards. In these embodiments, the spacers 20 may be configured with channels and/or conduits for directing a coolant or reactant fluid flow. FIG. 7a shows an embodiment of a spacer 20 with channels 27 etched into its surface for e.g. reactants to flow through. FIG. 7b shows an embodiment of a possible layout of an internal cooling channel or conduit 28 (shown by dotted lines) in a spacer 20, to allow a cooling gas or liquid to circulate between the anode layers of the fuel cell boards. Whilst spacers may have been seen in the prior art (see e.g. WO 2012/117035), there is no description of the separation of the reactant and coolant fluids so that the coolant is directed only to the anodes of the fuel cell boards and so that the reactant is directed only to the anodes of the fuel cell boards.

As used herein "spacer" is a term to mean any means which can be located between or as part of fuel cell boards to direct a fluid to, into, around, out of etc., fuel cell boards. Spacers provide space between boards to allow fluid flow. Other such terms or types of means could be utilised to achieve the same aim of allowing or directing fluid flow into, to, around or out of fuel cell boards.

FIG. 7c shows a diagrammatic representation of how the flows can enter and leave the fuel cell 50-2. 51a represents one flow going into the fuel cell, with 51b representing the same flow leaving the fuel cell. 53a represents another flow going into the fuel cell, with 53b representing the same flow leaving the fuel cell. 51a/51b and 53a/53b can either be coolant flow and reactant flow, or the other way around. Whichever way around it is, coolant flow and reactant flow are shown substantially perpendicular to each other. In this embodiment cooling fluid flow can be provided to either side with the reactant flow provided to the perpendicular side. In this embodiment, the coolant and reactant flows flow straight across the plane of the cells, and they leave the side of the cell opposite to the side they entered the cell. Whilst not apparent from this figure, the flows will enter and leave a fuel cell stack, or an individual fuel cell board, at different levels, so as to provide reactant or coolant flow to different layers of the stack. In present embodiments, a multi-stack fuel cell is used. However, the present technique can be applied to a fuel cell with a single fuel cell board, in which case a coolant fluid flow is directed to the anode side of the fuel cell board while a reactant fluid flow is directed to the cathode side of the fuel cell board.

Each fuel cell board is shown to have multiple anode-cathode pairs in FIG.s 2 and 3 and, whilst FIG.s 1 and 4B show fuel cell boards each having a single anode-cathode pair. The present techniques can be applied to a fuel cell comprising one or more fuel cell boards each having a single anode-cathode pair, or applied to a fuel cell comprising one or more fuel cell boards comprising multiple anode-cathode pairs on each board.

The coolant fluid may be air or water or any other fluid suitable for extracting heat from within a fuel cell. The reactant fluid may be oxygen gas, air or pressurised air or any other suitable fluid.

Although the invention as exemplified uses hydrogen as the reactant fuel (i.e. the reducible gas for the anodes), the fuel cells could be used with all suitable fuels, particularly pressurised fluids. As used herein "fluid" refers to a substance that has no fixed shape and yields easily to external pressure, for example a gas or a liquid. Fuels for use with the systems and methods as described herein are fluids. These fuels can be hydrogen or a hydrogen-containing mixture, or a hydrocarbon or hydrocarbon derivative. Fuels could be other gaseous fuels, such as methane or propane. Fuels could be other gaseous fuels, such as methane or propane and fluids include oxidants such as air and oxygen. For example, methanol could be used in Direct Methanol fuel cells. As used herein, directed into or out of a fuel cell board refers to input into or output or of a fuel cell board. This refers to direction of a fluid so that the fluid will be able to interact with relevant components of the fuel cell board, particularly so that a reactant fluid will be able to react with cathodes of the fuel cell board, or so that a coolant fluid is able to cool anodes of a fuel cell board.

The systems and methods can be used with pressurised fuel storage units or containers, as are well known in the art. The fuel can be stored in a pressurised storage unit, for example a bottle or canister. These can be, for example at a pressure of between 700 and 10 bar. In particular the fuel storage units can be suitable for use with fuel cells as described herein, i.e. at a pressure of between 150 and 350 bar.

In some embodiments, it may be desirable to supply a reactant fluid that has a different composition or density from a coolant fluid. For example, in aerospace applications, a fuel cell in an aircraft at high altitude may be operating in a low-pressure environment at a reduced oxygen level. To maintain the reaction at the cathodes at a desirable rate, it may be advantageous to increase oxygen level in the reactant air supplied to the cathode. By decoupling the reactant flow from the coolant flow, low-pressure atmospheric air can be pressurised prior to being supplied to the cathodes as reactant air, while unpressurised atmospheric air can be supplied as coolant air to the anodes.

In some embodiments, a catalyst layer on the electrodes accelerates a reaction with the fuel (on the anode electrode) and oxidant (on the cathode electrode) to create or consume the ions and electrons.

The fuel cells, fuel cell boards and components may be constructed from any suitable and desirable material, such as graphite or a metal. In some embodiments, the fuel cells, fuel cell boards or components can be constructed of Printed Circuit Boards (PCB). Individual layers in fuel cells can be constructed from PCBs i.e. current collection and distribution layers and reactant distribution layers, which can be adhered together into a solid structure using an epoxy-containing glass fibre composite. The PCBs may be fabricated from pre-impregnated composite fibres, such that they contain an amount of the material used to bond the individual layers together and to bond the MEAs to the PCBs, or a pre-impregnated composite fibre mask may be applied to the PCBs. The MEAs may be laser bonded onto a PCB, thereby creating a fuel cell board. To create the fuel cell stack, a plurality of boards can be laminated together. The gaps between the electrodes, and the sealing achieved in these gaps by the epoxy resin, prevent separate flows from mixing, i.e. prevent air cooling, reactant and fuel flows from mixing.

PCBs for the embodiments may be produced in the known way. Insulating layers may be made of dielectric substrates such as FR-1, FR-2, FR-3, FR-4, FR-5, FR-6, CEM-1, CEM-2, CEM-3, CEM-4, CEM-5, polytetrafluoroethylene, and G-10, which may be laminated together with an epoxy resin prepreg. In order to yield conductive areas, a thin layer of copper may either be applied to the whole insulating substrate and etched away using a mask to retain the desired conductive pattern, or applied by electroplating.

PCB technology has the advantage of enabling the elements to be manufactured in large quantities and at low cost. For example, multiple flow field boards can be manufactured at the same time, by using thin laminate boards which are stacked and then simultaneously routed. Individually routed boards are then stacked and laminated together. They also have a high mechanical strength, whilst being light, and when laminated together provide a solid structure, with good contact between the individual layers. Accordingly, a monolithic, light, and completely sealed structure is produced. A simple PCB can also be used as the end board. Use of PCB boards also enables the present fuel cells, fuel cell boards and components to be constructed without a mass or size penalty which may be present using other materials such as metal.

The construction of fuel cells from PCBs and their advantages are further described in WO2013164639.

In embodiments where a fuel cell stack is fabricated based on PCB technology, multiple bands of electrodes may be screen-printed onto the upper and lower surfaces of a membrane, and the membrane may be bonded to a multilayer PCB. The anodes and the cathodes may be formed of bands running in the same direction as, and connected in pairs by, through-membrane electrical connectors. The electrical connectors may be formed in bands along the electrolyte membrane.

In some embodiments, to deposit through-membrane electrical connectors, a metal or other electrically conductive material is chemically deposited within the membrane. The material is preferably chemically stable within the membrane under fuel cell operating conditions, and may typically be a precious metal (e.g. Pt, Au, Ru, Ir, Rh, Pd) or an oxide of a precious metal. Various approaches for depositing conductive bands in the membrane are described in WO2012117035.

In some embodiments, a catalyst layer may be provided on the electrodes. This layer may be made of suitable catalytic material for the reactions of interest, as is commonly understood by a person skilled in the art of fuel cell production. For example, the catalyst layer may be composed of platinum nanoparticles deposited on carbon and bound with a proton conducting polymer (e.g. Nafion^{™}).

The fuel cell boards may be constructed in any suitable and desirable dimensions. In some embodiments, the thickness of the electrolyte membrane layer may be between 1-200µm, and preferably between 5-100µm. The electrode bands may be 1mm-5cm in width, preferably 2mm-1cm in width. The gaps between the electrode bands are between 0.1mm-1.5cm wide, preferably between 0.2mm and 1cm wide. The width of the through-membrane electrical connectors may be 1µm-2mm and preferably 10µm-1mm.

Herein the construction of the fuel cell boards and the fuel cell stack is described herein in terms of 'horizontal' and 'vertical' planes, in accordance with the embodiments illustrated in the Figures. However, these terms are used for clarity only, and are not limiting on the scope of the invention. It will be clear to the reader that the fuel cell boards can be arranged in any plane, not just the horizontal plane. Further, the term 'directly opposite' is not limited to the electrodes being in register. The anode lies on one face of the polymer electrolyte and lies directly opposite a cathode on the opposite face of the same electrolyte membrane layer.

Reference herein to 'flows' refers to fluids being allowed to flow, or being substantially directed, either with or without assistance, along fluid flow paths, channels or the like.

Reference herein to "fuel cell boards" or a "fuel cell board" refers to a membrane electrode assembly (MEA) 113 sandwiched between and a PCB cathode plate 101 and a PCB anode plate 102. In the present embodiments, the three layers are laminated together. Some fuel cell boards may have a PCB cap layer also as part of the laminated structure. Fuel cell boards may also be referred to as fuel cell modules herein. The use of 'fuel cell board' is not intended to limit the size, shape or arrangement of the MEA, or other components of the board. Fuel cell board is not intended to be limiting on the size, shape or dimensions of the board, it is just a term in the art to refer to the MEAs and PCBs described herein.

Reference herein to "plated through holes" (PTHs) define holes that, on stacking of the fuel cell boards, line up to form a conduit through the fuel cell, said conduit running substantially perpendicular to the planar surfaces of the fuel cell boards. Plated though holes may be found on spacers or other components of the fuel cells. Plated though holes are necessary because PCB material (e.g. FR-4) is electrically insulative so PTHs must be introduced so that copper faces either side of a PCB can become electrically conductive. These may be formed by holes bring drilled through the PCB material (which are in themselves a layer of copper, a layer of FR4, and another layer of copper). These holes then undergo an electroplating dip process such that copper lines the edge of each hole, creating continuity between the two layers of copper of the PCB material. Optional additional steps can occur after this, wherein i) resin can be used fill the remainder of the hole, which is achieved by forcing resin over the PCB such that it flows through any holes present; ii) electroplating dip processing again such that the resin filled holes are capped with copper on both sides; and iii) there may be a mild milling process after this to ensure the surface of the PCB is flat.

The fuel cell described herein can fuel cells capable of, any envisioned power output for a fuel cell stack. This could be, for example, 200W of power output, of 150W power output, of 100W power output, of 90W power output, of 80W power output, of 70W power output, of 60W power output, of 50W power output, of 40W power output, of 30W power output, of 20W power output, of 10W power output, of 5W power output. This is the maximum power output of the fuel cells, cells can be set to the power output required as necessary. The fuel cell described herein can fuel cells capable of, for example, at least or a minimum of 5W power output, at least 10W power output, at least 20W power output, at least 30W power output, at least 40W power output, at least 50W power output, at least 60W power output, at least 70W power output, at least 80W power output, at least 90W power output, at least 100W power output, at least 150W power output, at least 200W power output. Other cathode geometries, such as closed cathode arrangements may be capable of 150 kW and above.

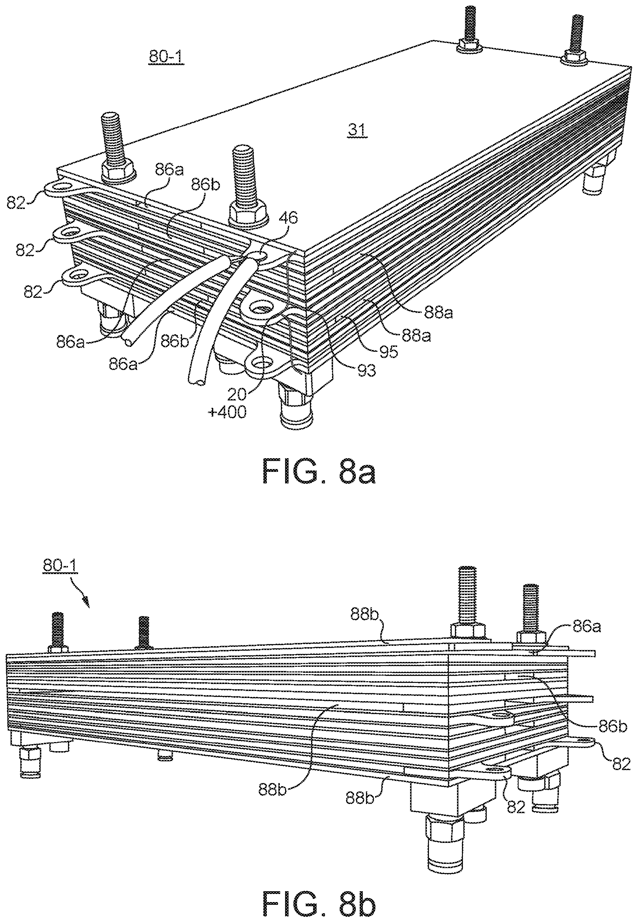

FIG. 8a and FIG. 8b show a fuel cell 80-1 from two different perspectives according to an embodiment. This has an anode-anode-cathode-cathode 4-module stack configuration with two slots for inlet of cooling air flow and three slots for inlet of reactant air. 5 air outlet slots are shown for exit of coolant and reactant air. Each module comprises 11 fuel cell boards, making a 44-cell-stack fuel cell. The fuel cell comprises a reactant fan for directing reactant air flow and a coolant fan for directing coolant air flow (fans not shown). This embodiment has a T-Flow air flow design.

In the present embodiment, the reactant air flow and the coolant air flow are also decoupled, but here arranged such that the reactant air flow is in the opposite entry direction to the coolant air flow. In this embodiment, both the reactant air flow and the coolant air flow enter the stack through inlet slots from opposite sides of the stack. Here, this air enters the two long sides of the stack, but each one from a directly opposite side (here both long sides). The coolant air enters the fuel cell stack through the two slots 88a and the reactant air enters the fuel cell through the three slots 88b. Coolant air flows into the stack so that it only reaches the exposed sides of anodes and the reactant air flows into the stack only so that it reaches the exposed sides of cathodes. In this embodiment, both the reactant air flow and the coolant air flow leave the stack from the short sides of the stacks. In this embodiment, the air flow (for both coolant and reactant air) leaves from a side/in a direction substantially perpendicular to how it entered. Here the reactant air flow exits the fuel cell through slots 86a and the coolant air flow exits the fuel cell through slots 86b (dashed line). Slots 86a and 86b alternate with each other through the stack.

The fuel cell stack is encased in a fuel cell casing with end plate 31 shown. Present in this embodiment are three cathode spacers (one of which is labelled 93 in FIG. 8a), two anode spacers (one of which is labelled 95 in FIG. 8b) and four fuel cell boards 400. Multiple electrical connection points 46 are visible. In the embodiment of FIG.s 8a and 8b there are five spacers in the stack, spaced between 8 fuel cell boards. Electrical connection points 82 are located on these spacers, three on one side of the fuel cell and two on the other side. These are not labelled in FIG.s 19a and 19b.

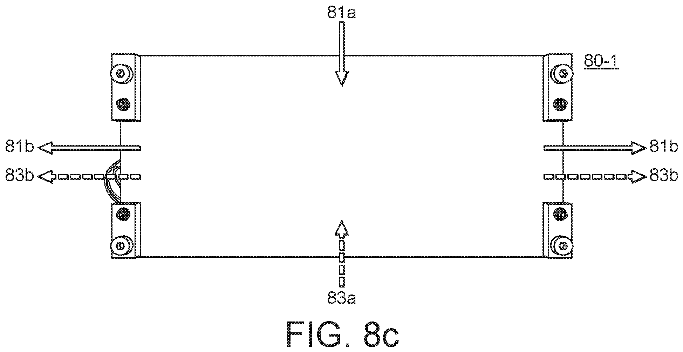

FIG. 8c shows a diagrammatic representation of how the air flow enters and leaves the fuel cell in this embodiment 80-1. 81a represents the coolant air flow into the fuel cell. 83a represents the reactant air flow into the fuel cell. 81b represents the coolant air flow leaving the fuel cell. 83b represents the coolant air flow leaving the fuel cell. Flow is in and out of slots as described above. Coolant and reactant air enter and leave the fuel cell in different planes/plates/boards/levels of the fuel cell, as shown in FIG.s 8a and 8b the slots for entry and exit of the coolant and reactant air are in different plates. Whilst not apparent from this figure, the flows will enter and leave a fuel cell stack, or an individual fuel cell board, at different levels, so as to provide reactant or coolant flow to different layers of the stack. Coolant and reactant flow enters one side, but both leave from two sides.

In this representative embodiment the fuel cell has long and short sides. However, the fuel cell/fuel cell boards could be different shapes, e.g. square, hexagonal, but in order to achieve the improved air flow dynamics, the reactant and coolant air can enter from opposite sides, but leave from the different sides substantially perpendicular to the side of input, or from two sides when entering one side. Whilst substantially perpendicular airflow is shown in this embodiment other angles (that are not 180, 90 or 0) are also possible, perpendicular is just representative.

The air flow from a single fan on each side of the fuel cell is diverted into the two 88a or three 88b slots on each side. For the reactant air, the central slot of 86a will have air flow going to two sets of interfacing cathodes layers (i.e. two sets of cathode-cathode pairs on different fuel cell boards), the upper and lower or edge slots of 86a only serve one cathode layer. In larger stacks, each central slot or non-edge slot would serve two interfacing cathode layers, with the end slots serving a lone cathode layer. The number of cathode gaps will always be Number of Modules/2+1.

As shown in this embodiment, but applicable for all embodiments herein, a single slot or entry point for cooling or reactant fluid can serve multiple layers flow can enter one slot or entry point and can flow through upwards or downwards to multiple layers, as demonstrated in this embodiment where one reactant air flow slot serves two interfacing cathodes layers.

The inlet and outlet slots for coolant and reactant airflow are in spacers disposed between adjacent fuel cell boards. In the embodiment of FIG.s 8a and 8b there are five spacers in the stack, spaced between 4 fuel cell boards. Electrical connection points 82 are located on these spacers, three on one side of the fuel cell and two on the other side. The spacer can be seen in FIG.s 9a to 9c.

In the embodiment shown in FIG.s 8a to 8c, the air flow (for both coolant and reactant air) leaves from a side and leaves in a direction substantially perpendicular to how it entered. This embodiment has the additional advantages over the previously described embodiments of the invention as it prevents any large gradients across the length of the stack by reducing the air flow distance in a single direction across the stacks and also acts to reduce air flow pressure. The embodiment shown in FIG.s 8a to 8c has the additional advantage of minimising possible air flow dead spots close to flow entry which can emerge when air flows flow straight across the plane of a cell, and in and out the opposite side to which they entered. This can happen in the exemplary embodiment seen in FIG. 5b/7c, where close to air inlet spots may not received as much flow of coolant or reactant as other parts of the cell.

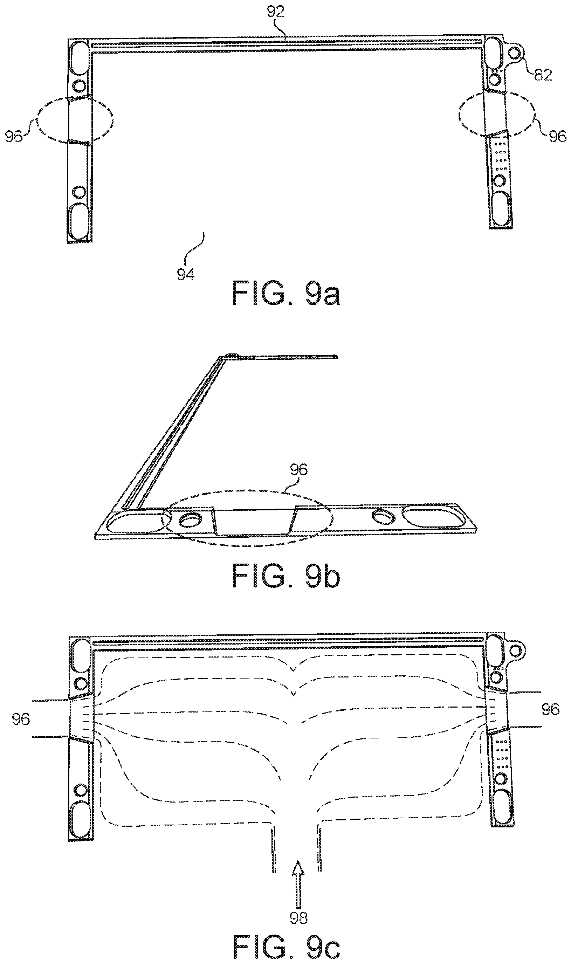

FIG. 9a shows a top-down perspective of a single spacer used in the fuel cell stack shown in FIG.s 8a, 8b and 8c. The dotted circles 96 show the routing areas on the side of the spacer for the exiting air flow. One side 94 is open to allow inlet air, the opposite side 92 is closed so that air must exit out of the outlets 96. Electrical connection point 82 is also labelled. FIG. 9b shows a side perspective of the same single spacer, with dotted circle 96 show the routing areas on the side of the spacer for the exiting air flow. FIG. 9c shows the same spacer as FIG.s 9a and 9b, with the airflow shown in dotted lines. Airflow enters at inlet 98 and leaves via outlets 96. Air pressure from the input air ensures a T-shaped flow through the spacer, to cool or provide reactant air to the exposed anodes or cathodes that the spacer will be adjacent to. An alternative embodiment to the T-Flow air flow design shown in FIG.s 8a, 8b, 8c is a U-Flow air flow design. Spacers with an alternative design to those shown in FIG. 9a, 9b and 9C can provide different air flow to that shown in FIG. 9c. These spacers and this air flow design can be used in for example the fuel cells shown in FIG. 5b, 8a and 8b.

This example spacer 92 and other spacers described herein, copper plating is only on the edges of the spacers, with only one side having conduction between faces. For example, in FIG 9a this is on the right-hand side where plated through holes can be seen. Spacers may be conductive on one side only and may be copper plated only along their edge. In embodiments utilising these spacers the current can "zigzag" up/down and across a stack of multiple fuel cell boards 400 in order to put all the cells in series. If copper was plated anywhere else on a spacer, an electrical short between adjacent cells on a module may occur. The copper on the non-conductive side is present such that one side of the spacer isn't thicker than the other. This enables an even compression over the seals which are only present on the sides of the module. Gaskets can sit in the spacers that seal between adjacent modules are all in the corners of the stack. By adding the copper on the short edge of the spacer, the thickness at this point throughout the stack is the same.

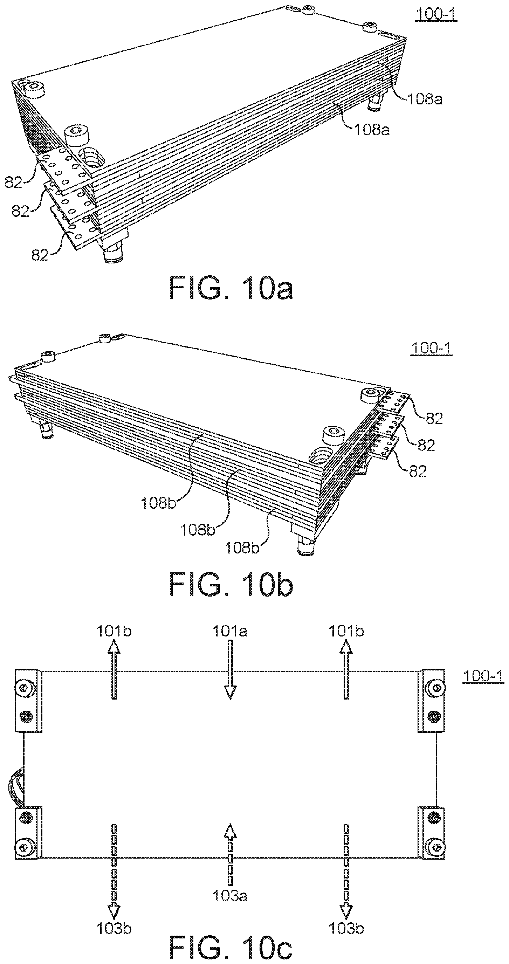

Figure 10a shows a fuel cell 100-1 from two different perspectives according to an embodiment. This has an anode-anode-cathode-cathode 4-module stack configuration with two slots for inlet of cooling air flow and three slots for inlet of reactant air. In this embodiment, both coolant and reactant air have inlet and outlet on the same side of the fuel cell. Compared to the embodiment shown in FIG.s 8a, 8b and 8c, there are no separate outlet slots (86a, 86b in FIG.s 8a, 8b and 8c). Here, 3 combined inlet/outlet slots are shown for combined input and output of reactant air, and 2 combined inlet/outlet slots are shown for combined input and output of coolant air. Each module comprises 11 fuel cell boards, making a 44-cell-stack fuel cell. The fuel cell comprises a reactant fan for directing reactant air flow and a coolant fan for directing coolant air flow (fans not shown). This embodiment has a U-Flow air flow design.

In the present embodiment, the reactant air flow and the coolant air flow are also decoupled, and here also arranged such that the reactant air flow is in the opposite entry direction to the coolant air flow. In this embodiment, both the reactant air flow and the coolant air flow enter the stack through inlet slots from opposite sides of the stack. This air enters the two long sides of the stack, but each one from a directly opposite side (here both long sides). The coolant air enters the fuel cell stack through the two slots 108a and the reactant air enters the fuel cell through the three slots 108b. Coolant air flows into the stack so that it only reaches the exposed sides of anodes and the reactant air flows into the stack only so that it reaches the exposed sides of cathodes. This is all the same in principle as the embodiment shown in FIG.s 8a, 8b, 8c.

In this embodiment, both the reactant air flow and the coolant air flow leave the stack from the same side of the stack as they enter. Slot 108a also acts as the outlet for the coolant air and slot 108b acts as the outlet for the reactant air. Electrical connection points 82 are also labelled.

FIG. 10c shows a diagrammatic representation of how the air flow enters and leaves the fuel cell in this embodiment 100-1. 101a represents the coolant air flow into the fuel cell. 103a represents the reactant air flow into the fuel cell. 101b represents the coolant air flow leaving the fuel cell. 103b represents the reactant air flow leaving the fuel cell. Flow is in and out of slots as described above. Coolant and reactant air enter and leave the fuel cell in different planes/plates/boards/levels of the fuel cell, as shown in FIG.s 10a and 10-b the slots for entry and exit of the coolant and reactant air are in different spacers in different levels. Here, the coolant and reactant air flows are still decoupled and input is opposite to each other. Whilst not apparent from this figure, the flows will enter and leave a fuel cell stack, or an individual fuel cell board, at different levels, so as to provide reactant or coolant flow to different layers of the stack.

In the embodiment shown in FIG.s 10a to 10c, the air flow (for both coolant and reactant air) leaves from a side/in a direction the same as it entered. This embodiment has the same additional advantages over the embodiments described in FIG. 5b/7c as the embodiment shown in FIG.s 8a to 8c - minimising possible air flow dead spots which can emerge when air flows flow straight across the plane of a cell, and acting to prevent any large gradients across the length of the stack by reducing the air flow distance across the stacks by reducing air flow pressure. This embodiment has the additional advantage of simplifying product design and manufacture as air only needs to be serviced at two sides of the stack, much like a traditional fuel cell stack (e.g. that described in FIG. 5a), but with the advantages of the de-coupled coolant and reactant air flows and also the advantages of the T-Flow design over a traditional fuel cell stack. The spacers are easier to manufacture in the U-Flow design.

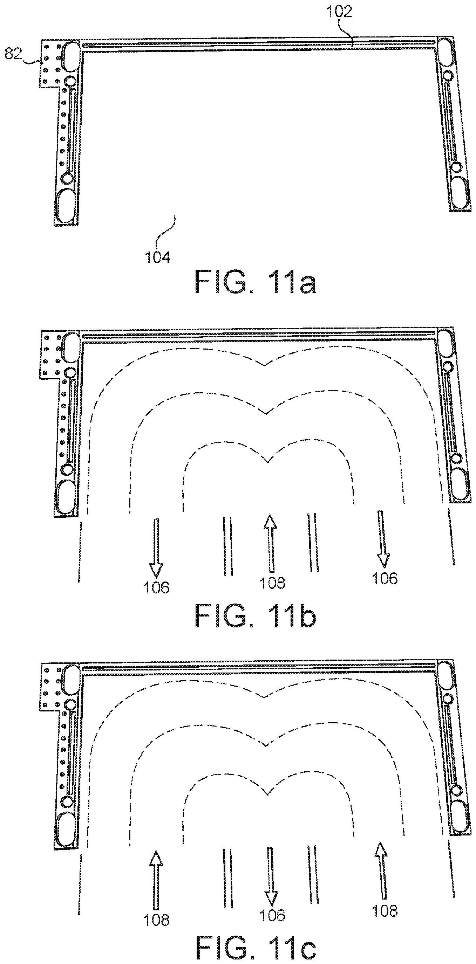

FIG. 11a shows a top-down perspective of a single spacer used in the fuel cell stack shown in FIG.s 10a, 10b and 10c. One side 104 is open to allow inlet and outlet of air, the opposite side 102 is closed so that air must exit out of the opposite side 104. Electrical connection point 82 is also labelled. FIG. 11b shows the same spacer as FIG. 11a, with the airflow shown in dotted lines. Airflow enters at 108 and leaves around 106. Air pressure from the input air ensures a U-shaped flow through the spacer, to cool or provide reactant air to the exposed anodes or cathodes that the spacer will be adjacent to. In this U-shaped flow after input at a central point, the air naturally splits when flowing across the stack and then exits the spacer/stack at two outlet points, either side of the input, peripheral to the central point.

Whilst air and airflow is described for these and earlier embodiments, as described elsewhere, other suitable coolant/reactant fluids could be utilised for fluid flow.

In a further embodiment it is possible to reverse the direction of the input and the output of the air in a U-shaped flow. Air can be inputted on two opposing or peripheral sides of the spacer, with air flowing to exit the spacer/stack at a single central outlet or output point. This can be seen in FIG. 11c which shows the same spacer as FIG. 11a, with the airflow shown in dotted lines. Airflow enters at 108 and leaves around 106. Air pressure from the input air ensures a U-shaped flow through the spacer, to cool or provide reactant air to the exposed anodes or cathodes that the spacer will be adjacent to. This is the reverse flow to what can be seen in FIG. 11b.

This reverse U-flow has additional advantages over the non-reverse U-flow. It gives a better distribution of air over the distribution zone. This is particularly advantageous when utilised to distribute reactant air to the cathodes. It allows for improved air distribution but with a lower velocity.

Decoupled flows of reactant and coolant allows for different airflow and/or spacer designs for the distribution of reactant air to the cathodes and coolant air. These can be used with the arrangements that input reactant and coolant in/out of the same or opposing/different sides of the fuel cell stacks. Both arrangements are described earlier herein, and provide different advantages as described herein.

In further embodiments, a direct "linear" flow can be utilised for reactant or coolant flow, directly from one side of the stack/fuel cell to the other side of the stack/fuel cell. This is a different flow path to the T-flow, U-flow or reversed U-flow, it is a linear flow. This linear flow can be in combination with a U-flow or reverse U-flow coolant distribution, for example a linear flow can be used for the coolant flow and a reverse U-flow can be used for the reactant flow. Preferably this linear flow can be used for the coolant flow across the anodes.

A spacer and fluid flow such as is seen in FIG. 11b or 11c can be used to supply reactant at a relative lower velocity to the cathodes. This lower velocity is comparison to the coolant fluid flow over the/to anodes, which can be at a high velocity. This anode coolant is supplied from one side of the stack to the other side of the stack, in one side and out the opposite side, in a linear flow. This provides the lowest impedance for the anode air flow and the shortest flow path across a stack, when used with a rectangular shaped stack, as it flows from one long side to another long side. Linear flow can be directed by spacers or any other means to allow flow from one side of the stack directly across to the other side of the stack.

The airflows in this embodiment, and indeed all embodiments, can utilise a common exhaust for the outlet of the airflow. Here, the outlet of the reactant coolant air and the outlet of the anode coolant air can be on the same side of the stack and thus utilises a common exhaust. The fluid, for example air, input to supply the anodes and the cathodes is decoupled, but the output is coupled.

Fuel cell stacks as described herein may utilise fan cowls to direct the air in, out and across the stacks. Cowls serve several purposes - to provide mounting points for devices that enables fluid flow (i.e. air by fans), to duct the fluid (e.g. air) flows from outside the system/product into the stack, and to duct the exhaust fluid flows from the stack out of the system/product. Cowls are typically made from an electrically insulative material such as plastic however, provided there is electrical insulation between the stack and cowl, a metallic cowl (i.e.) aluminium or stainless steel, can be used.

Although these cowls are described as fan cowls to direct reactant and/or coolant air throughout a stack, equivalent cowls or other such means could be utilised to distribute other types of coolant or reactants in a similar manner throughout fuel cell stacks.

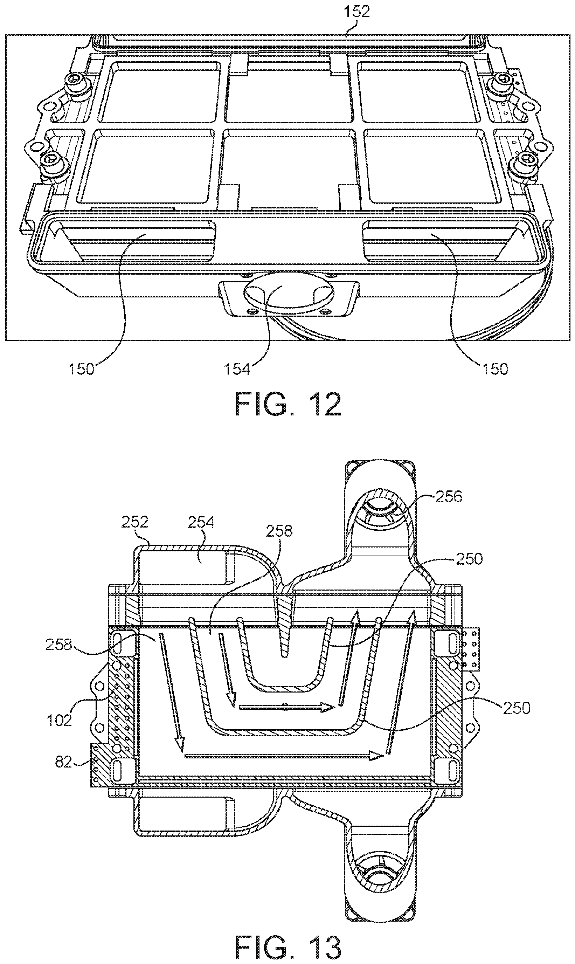

FIG. 12 shows a fuel cell stack with fan cowls shown. Two reactant inlet cowls 150 are show and one cooling air inlet cowl 152 is shown. A common exhaust or outlet 154 is also shown, by which reactant and coolant are able to leave the stack.

In any of the embodiments described herein, fluid flow may be directed by further means to direct fluid flow, which direct the flow of the fluid in a manner desired across the stack or across the fuel cell boards, to aid in distribution of the reactant/coolant fluids to the cathodes/anodes. These means could be attached to or part of the spacers, or they can be separate from the spacers, or not attached to the spacers, for example attached to a fan cowl. These means may be physical means to block, baffle or direct fluid flow. These may be inserts or baffles.

FIG. 13 shows an example of this, where inserts 250 are attached to a fan cowl system 252. These allow a fluid (here e.g. air) to be directed across the face of this fuel cell stack/fuel cell boards to distribute reactant or coolant across the boards (or component plates) in an alternative and in some ways improved manner. Cowl inlet 254 inputs the fluid (in this exemplary embodiment this is air) to spacer 102 much like as described elsewhere. However, once the air has been inputted, because it is under pressure or force from the fans, it is distributed throughout the spacer 102, along fluid flow paths 258 (shown here with arrows). Here, fluid flow paths 258 are labelled, showing how the fluid will flow across the plate through the spacer 102, across the fuel cell board. The fluid will flow to the outlet/exhaust 256. Electrical connection point 82 is labelled on spacer 102. If this was an anode spacer, it will direct coolant air over an anode plate to cool the anodes. If this was a cathode spacer, it will reactant air over the cathode plate to react at the cathodes.

Here, an alternative flow path to the T-shaped, U-shaped, reverse U-shaped and linear flows is shown. This flow allows flow from one side of the plate to the other (when considering 'sides' in a first axis), but fluid output is the same side of the stack/plate/spacer as fluid input is (when considering 'sides' in a second, different and perpendicular to the first, axis). This is a directed U-flow or alternative U-flow, as the flow is input and output of the same sides of the stack, as in the U-flow and reverse U-flow embodiments.

Further directing of the decoupled flows allows for improved cooling and improved reactant distribution. This allows fuel cell stacks to be able to operate at a higher temperature and/or more efficiently.

The alternative U-flow shown here demonstrates a lower fluid pressure drop than the first U-flow shown in earlier embodiments. This enabling a higher flow rate of fluid for a given input, thus if utilised for cooling fluid flow a more effective cooling, or reactant fluid flow a possibly increased reaction rate. Preferably this flow style with the inserts is utilised for cooling fluid flow, for cooling of anodes, as this is often the limiting factor in fuel cell design. Means to direct fluid flow, such as inserts enable a relatively balanced velocity across the module. Particularly, this alternative/directed U-flow to supply fluid to the anodes can be combined with a U-flow or a reverse U-flow to supply fluid to the cathodes, allowing for fully decoupled air flows (separate inlets, outlets, and no mixing of reactant and cooling air in the stack).

Generally speaking, and applicable to all embodiments, a higher coolant fluid flow rate than reactant fluid flow rate is preferential for most operating conditions of the fuel cell. A notable exception for this may be when the fuel cells are to operate at a lower ambient temperatures (for example 5 °C and below) where the required flow rates can converge.

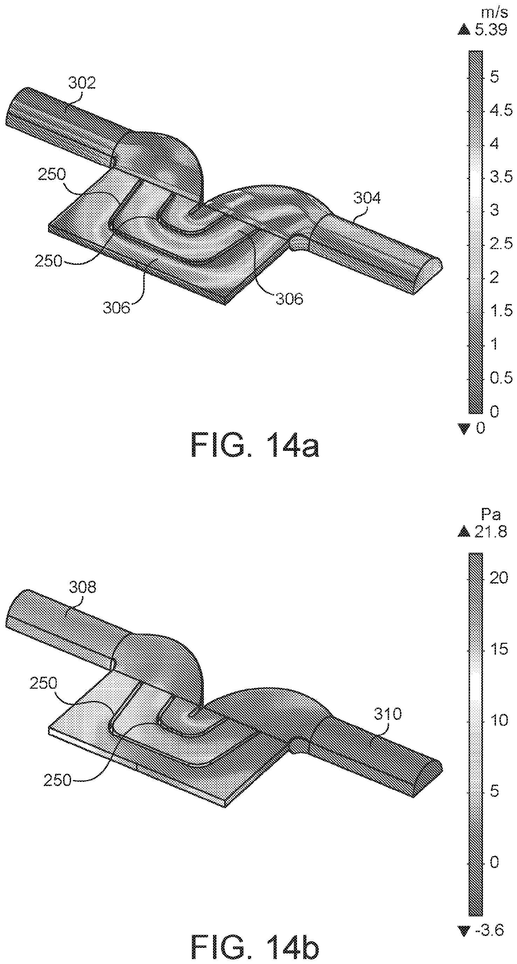

FIG.s 14a shows a fluid velocity model and FIG. 14b shows a fluid pressure model of this embodiment of fluid flow. For both, fluid is inputted on the left and side and outputted on the opposing, right hand side of a fuel cell board. The flow design is as seen in FIG. 13 and inserts 250 are labelled.

In the FIG. 14a, the fluid velocity model, a lower speed is seen in input 302 and output zones 304 (blue in not greyscale version of figures). Higher velocity can be seen in for example areas 306 (red in not greyscale version of figures).

In the FIG. 14b, the fluid pressure model, lower pressure is seen in input output zone 310 (blue in not greyscale version of figures) and higher pressure is seen in input output zone 308 (red in not greyscale version of figures). Medium but well distributed pressure can be seen throughout the flow (yellow/green in not greyscale version of figures).

Means to direct (e.g. inserts or baffles) may be made of any suitable material. Preferably, they are electrically insulating, for example made of a suitable plastic, so as not to interfere with any of the currents flowing through a fuel cell stack.

Whilst two inserts are shown in FIG.s 13 and 14, this is exemplary only, a single or more than two inserts could be utilised to direct fluid flow. Whilst inserts of a substantially U-shaped design are shown, alternative shapes could be utilised. Any means to direct the flow to certain areas of the stack can be used, e.g. to improve flow reaching dead spots of the stack where flow previous could not reach or was low.

Means to direct flow, for example inserts, could be utilised with any of the embodiments and flow patterns/types described herein, for example means to direct fluid flow could be combined with the T-shaped, U-shaped, reverse U-shaped and linear flows. It will be clear to one skilled in the art that many improvements and modifications can be made to the foregoing exemplary embodiments without departing from the scope of the present disclosure.

## Claims

1. A fuel cell comprising:
a plurality of fuel cell boards (22, 400), each fuel cell board (22, 400) comprising at least one ion permeable membrane (10), at least one anode (11) and at least one cathode (12), the at least one anode (11) and the at least one cathode (12) arranged on opposite surfaces of the at least one ion permeable membrane (10),
wherein the plurality of fuel cell boards (22, 400) are arranged such that the first surface of each fuel cell board (22, 400) faces the first surface of an adjacent fuel cell board (22, 400), and the second surface of each fuel cell board (22, 400) faces the second surface of an adjacent fuel cell board (22, 400); and
a plurality of fluid paths arranged to supply a coolant fluid to the plurality of fuel cell boards (22, 400), wherein the plurality of fluid paths are arranged between the first surfaces of an adjacent fuel cell boards (22, 400) such that the coolant fluid is substantially directed only to the at least one anode (11) of the fuel cell boards (22, 400);
a plurality of second fluid paths arranged to supply a reactant fluid to the plurality of fuel cell boards (22, 400), wherein the plurality of second fluid paths are arranged between the second surfaces of adjacent fuel cell boards (22, 400) such that the reactant fluid is substantially directed only to at least one cathode (12) of the fuel cell boards (22, 400),
wherein the coolant fluid is air.

2. The fuel cell of claim 1, wherein each fuel cell board (22, 400) of the plurality of fuel cell boards (22, 400) comprises at least one electrical connector (13) configured to connect the at least one anode (11) to the at least one cathode (12) through the at least one ion permeable membrane (10) of each fuel cell board (22, 400).

3. The fuel cell of claim 1 or claim 2, wherein each fuel cell board (22, 400) of the plurality of fuel cell boards (22, 400) comprises a plurality of anodes (11) and a plurality of cathodes (12) arranged in pairs, and a plurality of electrical connectors (13) configured to connect adjacent pairs of anodes (11) and cathodes (12) through the at least one ion permeable membrane (10) of each fuel cell board (22, 400).

4. The fuel cell of claim 1, wherein the plurality of second fluid paths are arranged to direct the reactant fluid in a direction substantially perpendicular to a direction in which the plurality of first fluid paths direct the coolant fluid.

5. The fuel cell of claim 1, wherein the plurality of second fluid paths are arranged to direct the reactant fluid into the fuel cell board (22, 400) in a direction substantially opposite to the direction in which the plurality of first fluid paths direct the coolant fluid into the fuel cell board (22, 400),
wherein the first fluid paths are arranged so that after input of the coolant fluid into the fuel cell board (22, 400) the coolant fluid leaves the fuel cell board (22, 400) in at least one direction substantially perpendicular to the direction it was directed into the fuel cell board (22, 400), and
wherein the second fluid paths are arranged so that after input of the reactant fluid into the fuel cell board (22, 400) the reactant fluid leaves the fuel cell board (22, 400) in at least one direction substantially perpendicular to the direction it was directed into the fuel cell board (22, 400), optionally
wherein the first fluid paths are also arranged so that after input of the coolant fluid to the fuel cell board (22, 400) the coolant fluid leaves the fuel cell board (22, 400) in two different directions, both directions substantially perpendicular to the direction the coolant fluid was directed into the fuel cell board (22, 400), and
wherein the second fluid paths are also arranged so that after input of the reactant fluid to the fuel cell board (22, 400) the reactant fluid leaves the fuel cell board (22, 400) in two different directions, both directions substantially perpendicular to the direction the reactant fluid was directed into the fuel cell board (22, 400).

6. The fuel cell of claim 1, wherein the plurality of second fluid paths are arranged to direct the reactant fluid into the fuel cell board (22, 400) in a direction substantially opposite to the direction in which the plurality of first fluid paths direct the coolant fluid into the fuel cell board (22, 400),
wherein the first fluid paths are arranged so that after input of the coolant fluid into the fuel cell board (22, 400) the coolant fluid leaves the fuel cell board (22, 400) in at least one direction substantially opposite to the direction it was directed into the fuel cell board (22, 400), and
wherein the second fluid paths are arranged so that after input of the reactant fluid into the fuel cell board (22, 400) the reactant fluid leaves the fuel cell board (22, 400) in at least one direction substantially opposite to the direction it was directed into the fuel cell board (22, 400), optionally
wherein the first fluid paths are arranged to direct the coolant fluid into the fuel cell board (22, 400) from a first side of the fuel cell board (22, 400) towards a second side of the fuel cell board (22, 400) opposite the first side and return the coolant fluid to the first side to exit the fuel cell board (22, 400) from the first side.

7. The fuel cell of claim 1, wherein the plurality of second fluid paths are arranged to direct the reactant fluid into the fuel cell board (22, 400) in a direction opposite to the direction in which the plurality of first fluid paths direct the coolant fluid into the fuel cell board (22, 400),
wherein the first fluid paths are arranged so that after input of the coolant fluid into the fuel cell board (22, 400) the coolant fluid leaves the fuel cell board (22, 400) in at least one direction substantially the same as the direction it is directed into the fuel cell board (22, 400), and
wherein the second fluid paths are arranged so that after input of the reactant fluid into the fuel cell board (22, 400) the reactant fluid leaves the fuel cell board (22, 400) in at least one direction substantially perpendicular or substantially opposite to the direction it was directed into the fuel cell board (22, 400), preferably substantially opposite to the direction it was directed into the fuel cell board (22, 400).

8. The fuel cell of any one of claims 1 to 7, wherein one or more of the first fluid and/or the second fluid paths are arranged to direct the coolant and/or reactant fluid into the fuel cell board (22, 400) from a first side of the fuel cell board (22, 400) and to direct the coolant and/or the coolant fluid out a second side of the fuel cell board (22, 400) opposite the first side of the fuel cell board (22, 400), preferably the one or more of the first fluid paths are arranged to direct the coolant fluid into the fuel cell board (22, 400) from a first side of the fuel cell board (22, 400) and to direct the coolant fluid out a second side of the fuel cell board (22, 400) opposite the first side of the fuel cell board (22, 400).

9. The fuel cell of any one of claims 1 to 8, further comprising a plurality of spacers (20, 102) disposed between adjacent fuel cell boards (22, 400), optionally wherein the spacers (20, 102) have fluid entry and/or exit points to direct the first and/or second fluid paths.

10. A method of decoupling coolant fluid flow in a fuel cell, comprising:
providing a plurality of fuel cell boards (22, 400), each fuel cell board (22, 400) comprising at least one ion permeable membrane (10), at least one anode (11) and at least one cathode (12), the at least one anode (11) and the at least one cathode (12) arranged on opposite surfaces of the at least one ion permeable membrane (10);
arranging the plurality of fuel cell boards (22, 400) such that the first surface of each fuel cell board (22, 400) faces the first surface of an adjacent fuel cell board (22, 400), and the second surface of each fuel cell board (22, 400) faces the second surface of an adjacent fuel cell board (22, 400);
arranging a plurality of first fluid paths between the first surfaces of adjacent fuel cell boards (22, 400) for supplying a coolant fluid to the at least one anode (11) of each of the plurality of fuel cell boards (22, 400), such that the coolant fluid is substantially directed only to the at least one anode (11) of the at least one fuel cell board (22, 400);
arranging a plurality of second fluid paths between the second surfaces of adjacent fuel cell boards (22, 400), for supplying a reactant fluid to the at least one cathode (12) of each of the plurality of fuel cell boards (22, 400), such that the reactant fluid is substantially directed only to the at least one cathode (12) of the fuel cell boards (22, 400),
wherein the coolant fluid is air.

11. The method of claim 10, further comprising:
providing a plurality of anodes (11) and a plurality of cathodes (12) arranged in pairs on each fuel cell board (22, 400);
providing a plurality of electrical connectors; and
connecting adjacent pairs of anodes (11) and cathodes (12) on the same fuel cell board (22, 400) with a plurality of electrical connectors through the at least one ion permeable membrane (10).

12. The method of claim 10, wherein the plurality of second fluid paths are arranged to direct the reactant fluid in a direction substantially perpendicular to a direction in which the plurality of first fluid paths direct the coolant fluid, or
wherein the plurality of second fluid paths are arranged to direct the reactant fluid into the fuel cell board (22, 400) in a direction substantially opposite to the direction in which the plurality of first fluid paths direct the coolant fluid into the fuel cell board (22, 400),
wherein the first fluid paths are arranged so that after input of the coolant fluid into the fuel cell board (22, 400) the coolant fluid leaves the fuel cell board (22, 400) in at least one direction substantially perpendicular to the direction it was directed into the fuel cell board (22, 400), and
wherein the second fluid paths are arranged so that after input of the reactant fluid into the fuel cell board (22, 400) the reactant fluid leaves the fuel cell board (22, 400) in at least one direction substantially perpendicular to the direction it was directed into the fuel cell board (22, 400), optionally
wherein the first fluid paths are also arranged so that after input of the coolant fluid to the fuel cell board (22, 400) the coolant fluid leaves the fuel cell board (22, 400) two different directions, both directions substantially perpendicular to the direction the coolant fluid was directed into the fuel cell board (22, 400), and
wherein the second fluid paths are also arranged so that after input of the reactant fluid to the fuel cell board (22, 400) the reactant fluid leaves the fuel cell board (22, 400) two different directions, both directions substantially perpendicular to the direction the reactant fluid was directed into the fuel cell board (22, 400).

13. The method of claim 10, wherein the plurality of second fluid paths are arranged to direct the reactant fluid into the fuel cell board (22, 400) in a direction substantially opposite to the direction in which the plurality of first fluid paths direct the coolant fluid into the fuel cell board (22, 400),
wherein the first fluid paths are arranged so that after input of the coolant fluid into the fuel cell board (22, 400) the coolant fluid leaves the fuel cell board (22, 400) in at least one direction substantially opposite to the direction it was directed into the fuel cell board (22, 400), and
wherein the second fluid paths are arranged so that after input of the reactant fluid into the fuel cell board (22, 400) the reactant fluid leaves the fuel cell board (22, 400) in at least one direction substantially opposite to the direction it was directed into the fuel cell board (22, 400), optionally
wherein the first fluid paths are arranged to direct the coolant fluid into the fuel cell board (22, 400) from a first side of the fuel cell board (22, 400) towards a second side of the fuel cell board (22, 400) opposite the first side and return the coolant fluid to the first side to exit the fuel cell board (22, 400) from the first side, further optionally
wherein one or more spacers (20, 102) are configured with an integrated reactant conduit defining at least one second fluid path for supplying a reactant fluid to the at least one fuel cell board (22, 400).

14. The method of claims 9 to 13, further comprising disposing a plurality of spacers (20, 102) between adjacent fuel cell boards (22, 400), optionally wherein one or more spacers (20, 102) are configured with an integrated coolant conduit defining the at least one first fluid path, optionally wherein the spacers (20, 102) have fluid entry and/or exit points to direct the first and/or second fluid paths and/or wherein the coolant fluid is directed at a rate higher than the reactant fluid.

15. The fuel cell of any of claims 1 to 9, or the method of decoupling coolant fluid flow in a fuel cell of any of claims 9 to 14, wherein each fuel cell board (22, 400) comprises a multilayer Printed Circuit Board, PCB, optionally wherein the at least one ion permeable membrane (10) of each fuel cell board (22, 400) is bonded to the multilayer PCB.

## Patentansprüche

1. Eine Brennstoffzelle, beinhaltend:
eine Vielzahl von Brennstoffzellenplatten (22, 400), wobei jede Brennstoffzellenplatte (22, 400) mindestens eine ionendurchlässige Membran (10), mindestens eine Anode (11) und mindestens eine Kathode (12) beinhaltet, wobei die mindestens eine Anode (11) und die mindestens eine Kathode (12) auf entgegengesetzten Oberflächen der mindestens einen ionendurchlässigen Membran (10) angeordnet sind,
wobei die Vielzahl von Brennstoffzellenplatten (22, 400) so angeordnet sind, dass die erste Oberfläche jeder Brennstoffzellenplatte (22, 400) zu der ersten Oberfläche einer benachbarten Brennstoffzellenplatte (22, 400) weist und die zweite Oberfläche jeder Brennstoffzellenplatte (22, 400) zu der zweiten Oberfläche einer benachbarten Brennstoffzellenplatte (22, 400) weist; und
eine Vielzahl von Fluidpfaden, die angeordnet sind, um der Vielzahl von Brennstoffzellenplatten (22, 400) ein Kühlfluid zuzuführen, wobei die Vielzahl von Fluidpfaden zwischen den ersten Oberflächen benachbarter Brennstoffzellenplatten (22, 400) angeordnet sind, sodass das Kühlfluid im Wesentlichen nur zu der mindestens einen Anode (11) der Brennstoffzellenplatten (22, 400) geleitet wird;
eine Vielzahl von zweiten Fluidpfaden, die angeordnet sind, um der Vielzahl von Brennstoffzellenplatten (22, 400) ein Reaktandenfluid zuzuführen, wobei die Vielzahl von zweiten Fluidpfaden zwischen den zweiten Oberflächen benachbarter Brennstoffzellenplatten (22, 400) angeordnet sind, sodass das Reaktandenfluid im Wesentlichen nur zu mindestens einer Kathode (12) der Brennstoffzellenplatten (22, 400) geleitet wird,
wobei das Kühlfluid Luft ist.

2. Brennstoffzelle gemäß Anspruch 1, wobei jede Brennstoffzellenplatte (22, 400) der Vielzahl von Brennstoffzellenplatten (22, 400) mindestens ein elektrisches Verbindungselement (13) beinhaltet, das dazu konfiguriert ist, die mindestens eine Anode (11) durch die mindestens eine ionendurchlässige Membran (10) jeder Brennstoffzellenplatte (22, 400) mit der mindestens einen Kathode (12) zu verbinden.

3. Brennstoffzelle gemäß Anspruch 1 oder Anspruch 2, wobei jede Brennstoffzellenplatte (22, 400) der Vielzahl von Brennstoffzellenplatten (22, 400) eine Vielzahl von Anoden (11) und eine Vielzahl von Kathoden (12), die in Paaren angeordnet sind, und eine Vielzahl elektrischer Verbindungselemente (13), die dazu konfiguriert sind, benachbarte Paare von Anoden (11) und Kathoden (12) durch die mindestens eine ionendurchlässige Membran (10) jeder Brennstoffzellenplatte (22, 400) zu verbinden, beinhaltet.

4. Brennstoffzelle gemäß Anspruch 1, wobei die Vielzahl von zweiten Fluidpfaden angeordnet sind, um das Reaktandenfluid in eine Richtung zu leiten, die im Wesentlichen lotrecht zu einer Richtung ist, in welcher die Vielzahl von ersten Fluidpfaden das Kühlfluid leiten.

5. Brennstoffzelle gemäß Anspruch 1, wobei die Vielzahl von zweiten Fluidpfaden angeordnet sind, um das Reaktandenfluid in einer Richtung in die Brennstoffzellenplatte (22, 400) zu leiten, die im Wesentlichen entgegengesetzt zu der Richtung ist, in welcher die Vielzahl von ersten Fluidpfaden das Kühlfluid in die Brennstoffzellenplatte (22, 400) leiten,
wobei die ersten Fluidpfade so angeordnet sind, dass nach dem Einführen des Kühlfluids in die Brennstoffzellenplatte (22, 400) das Kühlfluid die Brennstoffzellenplatte (22, 400) in mindestens einer Richtung verlässt, die im Wesentlichen lotrecht zu der Richtung ist, in welcher es in die Brennstoffzellenplatte (22, 400) geleitet wurde, und wobei die zweiten Fluidpfade so angeordnet sind, dass nach dem Einführen des Reaktandenfluids in die Brennstoffzellenplatte (22, 400) das Reaktandenfluid die Brennstoffzellenplatte (22, 400) in mindestens einer Richtung verlässt, die im Wesentlichen lotrecht zu der Richtung ist, in welcher es in die Brennstoffzellenplatte (22, 400) geleitet wurde,
wobei optional die ersten Fluidpfade auch so angeordnet sind, dass nach dem Einführen des Kühlfluids in die Brennstoffzellenplatte (22, 400) das Kühlfluid die Brennstoffzellenplatte (22, 400) in zwei unterschiedlichen Richtungen verlässt, wobei beide Richtungen im Wesentlichen lotrecht zu der Richtung sind, in welcher das Kühlfluid in die Brennstoffzellenplatte (22, 400) geleitet wurde, und
wobei optional die zweiten Fluidpfade auch so angeordnet sind, dass nach dem Einführen des Reaktandenfluids in die Brennstoffzellenplatte (22, 400) das Reaktandenfluid die Brennstoffzellenplatte (22, 400) in zwei unterschiedlichen Richtungen verlässt, wobei beide Richtungen im Wesentlichen lotrecht zu der Richtung sind, in welcher das Reaktandenfluid in die Brennstoffzellenplatte (22, 400) geleitet wurde.

6. Brennstoffzelle gemäß Anspruch 1, wobei die Vielzahl von zweiten Fluidpfaden angeordnet sind, um das Reaktandenfluid in einer Richtung in die Brennstoffzellenplatte (22, 400) zu leiten, die im Wesentlichen entgegengesetzt zu der Richtung ist, in welcher die Vielzahl von ersten Fluidpfaden das Kühlfluid in die Brennstoffzellenplatte (22, 400) leiten,
wobei die ersten Fluidpfade so angeordnet sind, dass nach dem Einführen des Kühlfluids in die Brennstoffzellenplatte (22, 400) das Kühlfluid die Brennstoffzellenplatte (22, 400) in mindestens einer Richtung verlässt, die im Wesentlichen entgegengesetzt zu der Richtung ist, in welcher es in die Brennstoffzellenplatte (22, 400) geleitet wurde, und
wobei die zweiten Fluidpfade so angeordnet sind, dass nach dem Einführen des Reaktandenfluids in die Brennstoffzellenplatte (22, 400) das Reaktandenfluid die Brennstoffzellenplatte (22, 400) in mindestens einer Richtung verlässt, die im Wesentlichen entgegengesetzt zu der Richtung ist, in welcher es in die Brennstoffzellenplatte (22, 400) geleitet wurde,
wobei optional die ersten Fluidpfade angeordnet sind, um das Kühlfluid von einer ersten Seite der Brennstoffzellenplatte (22, 400) in die Brennstoffzellenplatte (22, 400), hin zu einer zweiten, der ersten Seite entgegengesetzten Seite der Brennstoffzellenplatte (22, 400), zu leiten und das Kühlfluid zu der ersten Seite zurückzuführen, sodass es aus der ersten Seite aus der Brennstoffzellenplatte (22, 400) austritt.

7. Brennstoffzelle gemäß Anspruch 1, wobei die Vielzahl von zweiten Fluidpfaden angeordnet sind, um das Reaktandenfluid in einer Richtung in die Brennstoffzellenplatte (22, 400) zu leiten, die entgegengesetzt zu der Richtung ist, in welcher die Vielzahl von ersten Fluidpfaden das Kühlfluid in die Brennstoffzellenplatte (22, 400) leiten,
wobei die ersten Fluidpfade so angeordnet sind, dass nach dem Einführen des Kühlfluids in die Brennstoffzellenplatte (22, 400) das Kühlfluid die Brennstoffzellenplatte (22, 400) in mindestens einer Richtung verlässt, die im Wesentlichen die gleiche ist wie die Richtung, in welcher es in die Brennstoffzellenplatte (22, 400) geleitet wird, und wobei die zweiten Fluidpfade so angeordnet sind, dass nach dem Einführen des Reaktandenfluids in die Brennstoffzellenplatte (22, 400) das Reaktandenfluid die Brennstoffzellenplatte (22, 400) in mindestens einer Richtung verlässt, die im Wesentlichen lotrecht oder im Wesentlichen entgegengesetzt zu der Richtung ist, in welcher es in die Brennstoffzellenplatte (22, 400) geleitet wurde, vorzugsweise im Wesentlichen entgegengesetzt zu der Richtung, in welcher es in die Brennstoffzellenplatte (22, 400) geleitet wurde.

8. Brennstoffzelle gemäß einem der Ansprüche 1 bis 7, wobei einer oder mehrere von den ersten Fluidpfaden und/oder den zweiten Fluidpfaden angeordnet sind, um das Kühl- und/oder Reaktandenfluid von einer ersten Seite der Brennstoffzellenplatte (22, 400) in die Brennstoffzellenplatte (22, 400) zu leiten und das Kühl- und/oder das Kühlfluid auf einer zweiten, der ersten Seite der Brennstoffzellenplatte (22, 400) entgegengesetzten Seite der Brennstoffzellenplatte (22, 400) herauszuleiten, wobei vorzugsweise der eine oder die mehreren der ersten Fluidpfade angeordnet sind, um das Kühlfluid von einer ersten Seite der Brennstoffzellenplatte (22, 400) in die Brennstoffzellenplatte (22, 400) zu leiten und das Kühlfluid auf einer zweiten, der ersten Seite der Brennstoffzellenplatte (22, 400) entgegengesetzten Seite der Brennstoffzellenplatte (22, 400) herauszuleiten.

9. Brennstoffzelle gemäß einem der Ansprüche 1 bis 8, ferner beinhaltend eine Vielzahl von Abstandhaltern (20, 102), die zwischen benachbarten Brennstoffzellenplatten (22, 400) eingerichtet sind, wobei die Abstandhalter (20, 102) optional Fluideintritts- und/oder-austrittspunkte aufweisen, um die ersten und/oder zweiten Fluidpfade zu leiten.

10. Ein Verfahren zum Entkoppeln des Kühlfluidstroms in einer Brennstoffzelle, beinhaltend:
Bereitstellen einer Vielzahl von Brennstoffzellenplatten (22, 400), wobei jede Brennstoffzellenplatte (22, 400) mindestens eine ionendurchlässige Membran (10), mindestens eine Anode (11) und mindestens eine Kathode (12) beinhaltet, wobei die mindestens eine Anode (11) und die mindestens eine Kathode (12) auf entgegengesetzten Oberflächen der mindestens einen ionendurchlässigen Membran (10) angeordnet sind;
Anordnen der Vielzahl von Brennstoffzellenplatten (22, 400), sodass die erste Oberfläche jeder Brennstoffzellenplatte (22, 400) zu der ersten Oberfläche einer benachbarten Brennstoffzellenplatte (22, 400) weist und die zweite Oberfläche jeder Brennstoffzellenplatte (22, 400) zu der zweiten Oberfläche einer benachbarten Brennstoffzellenplatte (22, 400) weist;
Anordnen einer Vielzahl von ersten Fluidpfaden zwischen den ersten Oberflächen benachbarter Brennstoffzellenplatten (22, 400) zum Zuführen eines Kühlfluids zu der mindestens einen Anode (11) von jeder der Vielzahl von Brennstoffzellenplatten (22, 400), sodass das Kühlfluid im Wesentlichen nur zu der mindestens einen Anode (11) der mindestens einen Brennstoffzellenplatte (22, 400) geleitet wird;
Anordnen einer Vielzahl von zweiten Fluidpfaden zwischen den zweiten Oberflächen benachbarter Brennstoffzellenplatten (22, 400) zum Zuführen eines Reaktandenfluids zu der mindestens einen Kathode (12) von jeder der Vielzahl von Brennstoffzellenplatten (22, 400), sodass das Reaktandenfluid im Wesentlichen nur zu der mindestens einen Kathode (12) der Brennstoffzellenplatten (22, 400) geleitet wird,
wobei das Kühlfluid Luft ist.

11. Verfahren gemäß Anspruch 10, ferner beinhaltend:
Bereitstellen einer Vielzahl von Anoden (11) und einer Vielzahl von Kathoden (12), die in Paaren auf jeder Brennstoffzellenplatte (22, 400) angeordnet sind;
Bereitstellen einer Vielzahl elektrischer Verbindungselemente; und
Verbinden benachbarter Paare von Anoden (11) und Kathoden (12) auf derselben Brennstoffzellenplatte (22, 400) mit einer Vielzahl elektrischer Verbindungselemente durch die mindestens eine ionendurchlässige Membran (10).

12. Verfahren gemäß Anspruch 10, wobei die Vielzahl von zweiten Fluidpfaden angeordnet sind, um das Reaktandenfluid in eine Richtung zu leiten, die im Wesentlichen lotrecht zu einer Richtung ist, in welcher die Vielzahl von ersten Fluidpfaden das Kühlfluid leiten, oder
wobei die Vielzahl von zweiten Fluidpfaden angeordnet sind, um das Reaktandenfluid in einer Richtung in die Brennstoffzellenplatte (22, 400) zu leiten, die im Wesentlichen entgegengesetzt zu der Richtung ist, in welcher die Vielzahl von ersten Fluidpfaden das Kühlfluid in die Brennstoffzellenplatte (22, 400) leiten,
wobei die ersten Fluidpfade so angeordnet sind, dass nach dem Einführen des Kühlfluids in die Brennstoffzellenplatte (22, 400) das Kühlfluid die Brennstoffzellenplatte (22, 400) in mindestens einer Richtung verlässt, die im Wesentlichen lotrecht zu der Richtung ist, in welcher es in die Brennstoffzellenplatte (22, 400) geleitet wurde, und wobei die zweiten Fluidpfade so angeordnet sind, dass nach dem Einführen des Reaktandenfluids in die Brennstoffzellenplatte (22, 400) das Reaktandenfluid die Brennstoffzellenplatte (22, 400) in mindestens einer Richtung verlässt, die im Wesentlichen lotrecht zu der Richtung ist, in welcher es in die Brennstoffzellenplatte (22, 400) geleitet wurde,
wobei optional die ersten Fluidpfade auch so angeordnet sind, dass nach dem Einführen des Kühlfluids in die Brennstoffzellenplatte (22, 400) das Kühlfluid die Brennstoffzellenplatte (22, 400) in zwei unterschiedlichen Richtungen verlässt, wobei beide Richtungen im Wesentlichen lotrecht zu der Richtung sind, in welcher das Kühlfluid in die Brennstoffzellenplatte (22, 400) geleitet wurde, und
wobei optional die zweiten Fluidpfade auch so angeordnet sind, dass nach dem Einführen des Reaktandenfluids in die Brennstoffzellenplatte (22, 400) das Reaktandenfluid die Brennstoffzellenplatte (22, 400) in zwei unterschiedlichen Richtungen verlässt, wobei beide Richtungen im Wesentlichen lotrecht zu der Richtung sind, in welcher das Reaktandenfluid in die Brennstoffzellenplatte (22, 400) geleitet wurde.

13. Verfahren gemäß Anspruch 10, wobei die Vielzahl von zweiten Fluidpfaden angeordnet sind, um das Reaktandenfluid in einer Richtung in die Brennstoffzellenplatte (22, 400) zu leiten, die im Wesentlichen entgegengesetzt zu der Richtung ist, in welcher die Vielzahl von ersten Fluidpfaden das Kühlfluid in die Brennstoffzellenplatte (22, 400) leiten,
wobei die ersten Fluidpfade so angeordnet sind, dass nach dem Einführen des Kühlfluids in die Brennstoffzellenplatte (22, 400) das Kühlfluid die Brennstoffzellenplatte (22, 400) in mindestens einer Richtung verlässt, die im Wesentlichen entgegengesetzt zu der Richtung ist, in welcher es in die Brennstoffzellenplatte (22, 400) geleitet wurde, und
wobei die zweiten Fluidpfade so angeordnet sind, dass nach dem Einführen des Reaktandenfluids in die Brennstoffzellenplatte (22, 400) das Reaktandenfluid die Brennstoffzellenplatte (22, 400) in mindestens einer Richtung verlässt, die im Wesentlichen entgegengesetzt zu der Richtung ist, in welcher es in die Brennstoffzellenplatte (22, 400) geleitet wurde,
wobei optional die ersten Fluidpfade angeordnet sind, um das Kühlfluid von einer ersten Seite der Brennstoffzellenplatte (22, 400) in die Brennstoffzellenplatte (22, 400), hin zu einer zweiten, der ersten Seite entgegengesetzten Seite der Brennstoffzellenplatte (22, 400), zu leiten und das Kühlfluid zu der ersten Seite zurückzuführen, sodass es aus der ersten Seite aus der Brennstoffzellenplatte (22, 400) austritt,
wobei ferner optional ein oder mehrere Abstandhalter (20, 102) mit einem integrierten Reaktandendurchgang konfiguriert sind, der mindestens einen zweiten Fluidpfad zum Zuführen eines Reaktandenfluids zu der mindestens einen Brennstoffzellenplatte (22, 400) definiert.

14. Verfahren gemäß den Ansprüchen 9 bis 13, ferner beinhaltend das Einrichten einer Vielzahl von Abstandhaltern (20, 102) zwischen benachbarten Brennstoffzellenplatten (22, 400), wobei optional ein oder mehrere Abstandhalter (20, 102) mit einem integrierten Kühldurchgang konfiguriert sind, der den mindestens einen ersten Fluidpfad definiert, wobei die Abstandhalter (20, 102) optional Fluideintritts- und/oder Austrittspunkte aufweisen, um den ersten und/oder zweiten Fluidpfad zu leiten, und/oder wobei das Kühlfluid mit einer höheren Geschwindigkeit geleitet wird als das Reaktandenfluid.

15. Brennstoffzelle gemäß einem der Ansprüche 1 bis 9 oder Verfahren des Entkoppelns des Kühlfluidstroms in einer Brennstoffzelle gemäß einem der Ansprüche 9 bis 14, wobei jede Brennstoffzellenplatte (22, 400) eine mehrschichtige Leiterplatte, PCB, beinhaltet, wobei optional die mindestens eine ionendurchlässige Membran (10) jeder Brennstoffzellenplatte (22, 400) an die mehrschichtige PCB gebunden ist.

## Revendications

1. Une pile à combustible comprenant :
une pluralité de plaques de pile à combustible (22, 400), chaque plaque de pile à combustible (22, 400) comprenant au moins une membrane perméable aux ions (10), au moins une anode (11) et au moins une cathode (12), l'au moins une anode (11) et l'au moins une cathode (12) étant agencées sur des surfaces opposées de l'au moins une membrane perméable aux ions (10),
où la pluralité de plaques de pile à combustible (22, 400) sont agencées de telle sorte que la première surface de chaque plaque de pile à combustible (22, 400) est tournée vers la première surface d'une plaque de pile à combustible (22, 400) adjacente, et la deuxième surface de chaque plaque de pile à combustible (22, 400) est tournée vers la deuxième surface d'une plaque de pile à combustible (22, 400) adjacente ; et
une pluralité de voies de fluide agencées pour apporter un fluide réfrigérant à la pluralité de plaques de pile à combustible (22, 400), où la pluralité de voies de fluide sont agencées entre les premières surfaces de plaques de pile à combustible (22, 400) adjacentes de telle sorte que le fluide réfrigérant n'est acheminé substantiellement que vers l'au moins une anode (11) des plaques de pile à combustible (22, 400) ;
une pluralité de deuxièmes voies de fluide agencées pour apporter un fluide réactif à la pluralité de plaques de pile à combustible (22, 400), où la pluralité de deuxièmes voies de fluide sont agencées entre les deuxièmes surfaces de plaques de pile à combustible (22, 400) adjacentes de telle sorte que le fluide réactif n'est acheminé substantiellement que vers au moins une cathode (12) des plaques de pile à combustible (22, 400),
où le fluide réfrigérant est de l'air.

2. La pile à combustible de la revendication 1, où chaque plaque de pile à combustible (22, 400) de la pluralité de plaques de pile à combustible (22, 400) comprend au moins un connecteur électrique (13) configuré pour connecter l'au moins une anode (11) à l'au moins une cathode (12) à travers l'au moins une membrane perméable aux ions (10) de chaque plaque de pile à combustible (22, 400).

3. La pile à combustible de la revendication 1 ou la revendication 2, où chaque plaque de pile à combustible (22, 400) de la pluralité de plaques de pile à combustible (22, 400) comprend une pluralité d'anodes (11) et une pluralité de cathodes (12) agencées par paires, et une pluralité de connecteurs électriques (13) configurés pour connecter des paires d'anodes (11) et de cathodes (12) adjacentes à travers l'au moins une membrane perméable aux ions (10) de chaque plaque de pile à combustible (22, 400).

4. La pile à combustible de la revendication 1, où la pluralité de deuxièmes voies de fluide sont agencées pour acheminer le fluide réactif suivant une direction substantiellement perpendiculaire à une direction suivant laquelle la pluralité de premières voies de fluide acheminent le fluide réfrigérant.

5. La pile à combustible de la revendication 1, où la pluralité de deuxièmes voies de fluide sont agencées pour acheminer le fluide réactif jusque dans la plaque de pile à combustible (22, 400) suivant une direction substantiellement opposée à la direction suivant laquelle la pluralité de premières voies de fluide acheminent le fluide réfrigérant jusque dans la plaque de pile à combustible (22, 400),
où les premières voies de fluide sont agencées de sorte qu'après introduction du fluide réfrigérant à l'intérieur de la plaque de pile à combustible (22, 400) le fluide réfrigérant quitte la plaque de pile à combustible (22, 400) suivant au moins une direction substantiellement perpendiculaire à la direction suivant laquelle il a été acheminé jusque dans la plaque de pile à combustible (22, 400), et
où les deuxièmes voies de fluide sont agencées de sorte qu'après introduction du fluide réactif à l'intérieur de la plaque de pile à combustible (22, 400) le fluide réactif quitte la plaque de pile à combustible (22, 400) suivant au moins une direction substantiellement perpendiculaire à la direction suivant laquelle il a été acheminé jusque dans la plaque de pile à combustible (22, 400), facultativement
où les premières voies de fluide sont aussi agencées de sorte qu'après introduction du fluide réfrigérant dans la plaque de pile à combustible (22, 400) le fluide réfrigérant quitte la plaque de pile à combustible (22, 400) suivant deux directions différentes, les deux directions étant substantiellement perpendiculaires à la direction suivant laquelle le fluide réfrigérant a été acheminé jusque dans la plaque de pile à combustible (22, 400), et
où les deuxièmes voies de fluide sont aussi agencées de sorte qu'après introduction du fluide réactif dans la plaque de pile à combustible (22, 400) le fluide réactif quitte la plaque de pile à combustible (22, 400) suivant deux directions différentes, les deux directions étant substantiellement perpendiculaires à la direction suivant laquelle le fluide réactif a été acheminé jusque dans la plaque de pile à combustible (22, 400).

6. La pile à combustible de la revendication 1, où la pluralité de deuxièmes voies de fluide sont agencées pour acheminer le fluide réactif jusque dans la plaque de pile à combustible (22, 400) suivant une direction substantiellement opposée à la direction suivant laquelle la pluralité de premières voies de fluide acheminent le fluide réfrigérant jusque dans la plaque de pile à combustible (22, 400),
où les premières voies de fluide sont agencées de sorte qu'après introduction du fluide réfrigérant à l'intérieur de la plaque de pile à combustible (22, 400) le fluide réfrigérant quitte la plaque de pile à combustible (22, 400) suivant au moins une direction substantiellement opposée à la direction suivant laquelle il a été acheminé jusque dans la plaque de pile à combustible (22, 400), et
où les deuxièmes voies de fluide sont agencées de sorte qu'après introduction du fluide réactif à l'intérieur de la plaque de pile à combustible (22, 400) le fluide réactif quitte la plaque de pile à combustible (22, 400) suivant au moins une direction substantiellement opposée à la direction suivant laquelle il a été acheminé jusque dans la plaque de pile à combustible (22, 400), facultativement
où les premières voies de fluide sont agencées pour acheminer le fluide réfrigérant jusque dans la plaque de pile à combustible (22, 400) par un premier côté de la plaque de pile à combustible (22, 400) vers un deuxième côté de la plaque de pile à combustible (22, 400) à l'opposé du premier côté et renvoyer le fluide réfrigérant vers le premier côté pour sortir de la plaque de pile à combustible (22, 400) par le premier côté.

7. La pile à combustible de la revendication 1, où la pluralité de deuxièmes voies de fluide sont agencées pour acheminer le fluide réactif jusque dans la plaque de pile à combustible (22, 400) suivant une direction opposée à la direction suivant laquelle la pluralité de premières voies de fluide acheminent le fluide réfrigérant jusque dans la plaque de pile à combustible (22, 400),
où les premières voies de fluide sont agencées de sorte qu'après introduction du fluide réfrigérant à l'intérieur de la plaque de pile à combustible (22, 400) le fluide réfrigérant quitte la plaque de pile à combustible (22, 400) suivant au moins une direction substantiellement identique à la direction suivant laquelle il est acheminé jusque dans la plaque de pile à combustible (22, 400), et
où les deuxièmes voies de fluide sont agencées de sorte qu'après introduction du fluide réactif à l'intérieur de la plaque de pile à combustible (22, 400) le fluide réactif quitte la plaque de pile à combustible (22, 400) suivant au moins une direction substantiellement perpendiculaire ou substantiellement opposée à la direction suivant laquelle il a été acheminé jusque dans la plaque de pile à combustible (22, 400), de préférence substantiellement opposée à la direction suivant laquelle il a été acheminé jusque dans la plaque de pile à combustible (22, 400).

8. La pile à combustible de n'importe laquelle des revendications 1 à 7, où une ou plusieurs voies de fluide parmi les premières voies de fluide et/ou les deuxièmes voies de fluide sont agencées pour acheminer le fluide réfrigérant et/ou réactif jusque dans la plaque de pile à combustible (22, 400) par un premier côté de la plaque de pile à combustible (22, 400) et pour acheminer le réfrigérant et/ou le fluide réfrigérant pour le faire sortir par un deuxième côté de la plaque de pile à combustible (22, 400) à l'opposé du premier côté de la plaque de pile à combustible (22, 400), de préférence les une ou plusieurs voies de fluide parmi les premières voies de fluide sont agencées pour acheminer le fluide réfrigérant jusque dans la plaque de pile à combustible (22, 400) par un premier côté de la plaque de pile à combustible (22, 400) et pour acheminer le fluide réfrigérant pour le faire sortir par un deuxième côté de la plaque de pile à combustible (22, 400) à l'opposé du premier côté de la plaque de pile à combustible (22, 400).

9. La pile à combustible de n'importe laquelle des revendications 1 à 8, comprenant en outre une pluralité d'entretoises (20, 102) disposées entre des plaques de pile à combustible (22, 400) adjacentes, facultativement où les entretoises (20, 102) ont des points d'entrée et/ou de sortie de fluide pour acheminer les premières et/ou deuxièmes voies de fluide.

10. Un procédé de découplage d'écoulement de fluide réfrigérant dans une pile à combustible, comprenant :
la fourniture d'une pluralité de plaques de pile à combustible (22, 400), chaque plaque de pile à combustible (22, 400) comprenant au moins une membrane perméable aux ions (10), au moins une anode (11) et au moins une cathode (12), l'au moins une anode (11) et l'au moins une cathode (12) étant agencées sur des surfaces opposées de l'au moins une membrane perméable aux ions (10) ;
l'agencement de la pluralité de plaques de pile à combustible (22, 400) de telle sorte que la première surface de chaque plaque de pile à combustible (22, 400) est tournée vers la première surface d'une plaque de pile à combustible (22, 400) adjacente, et la deuxième surface de chaque plaque de pile à combustible (22, 400) est tournée vers la deuxième surface d'une plaque de pile à combustible (22, 400) adjacente ;
l'agencement d'une pluralité de premières voies de fluide entre les premières surfaces de plaques de pile à combustible (22, 400) adjacentes pour apporter un fluide réfrigérant à l'au moins une anode (11) de chaque plaque de pile à combustible de la pluralité de plaques de pile à combustible (22, 400), de telle sorte que le fluide réfrigérant n'est acheminé substantiellement que vers l'au moins une anode (11) de l'au moins une plaque de pile à combustible (22, 400) ;
l'agencement d'une pluralité de deuxièmes voies de fluide entre les deuxièmes surfaces de plaques de pile à combustible (22, 400) adjacentes, pour apporter un fluide réactif à l'au moins une cathode (12) de chaque plaque de pile à combustible de la pluralité de plaques de pile à combustible (22, 400), de telle sorte que le fluide réactif n'est acheminé substantiellement que vers l'au moins une cathode (12) des plaques de pile à combustible (22, 400),
où le fluide réfrigérant est de l'air.

11. Le procédé de la revendication 10, comprenant en outre :
la fourniture d'une pluralité d'anodes (11) et d'une pluralité de cathodes (12) agencées par paires sur chaque plaque de pile à combustible (22, 400) ;
la fourniture d'une pluralité de connecteurs électriques ; et
la connexion de paires d'anodes (11) et de cathodes (12) adjacentes sur la même plaque de pile à combustible (22, 400) avec une pluralité de connecteurs électriques à travers l'au moins une membrane perméable aux ions (10).

12. Le procédé de la revendication 10, où la pluralité de deuxièmes voies de fluide sont agencées pour acheminer le fluide réactif suivant une direction substantiellement perpendiculaire à une direction suivant laquelle la pluralité de premières voies de fluide acheminent le fluide réfrigérant, ou
où la pluralité de deuxièmes voies de fluide sont agencées pour acheminer le fluide réactif jusque dans la plaque de pile à combustible (22, 400) suivant une direction substantiellement opposée à la direction suivant laquelle la pluralité de premières voies de fluide acheminent le fluide réfrigérant jusque dans la plaque de pile à combustible (22, 400),
où les premières voies de fluide sont agencées de sorte qu'après introduction du fluide réfrigérant à l'intérieur de la plaque de pile à combustible (22, 400) le fluide réfrigérant quitte la plaque de pile à combustible (22, 400) suivant au moins une direction substantiellement perpendiculaire à la direction suivant laquelle il a été acheminé jusque dans la plaque de pile à combustible (22, 400), et
où les deuxièmes voies de fluide sont agencées de sorte qu'après introduction du fluide réactif à l'intérieur de la plaque de pile à combustible (22, 400) le fluide réactif quitte la plaque de pile à combustible (22, 400) suivant au moins une direction substantiellement perpendiculaire à la direction suivant laquelle il a été acheminé jusque dans la plaque de pile à combustible (22, 400), facultativement
où les premières voies de fluide sont aussi agencées de sorte qu'après introduction du fluide réfrigérant dans la plaque de pile à combustible (22, 400) le fluide réfrigérant quitte la plaque de pile à combustible (22, 400) suivant deux directions différentes, les deux directions étant substantiellement perpendiculaires à la direction suivant laquelle le fluide réfrigérant a été acheminé jusque dans la plaque de pile à combustible (22, 400), et
où les deuxièmes voies de fluide sont aussi agencées de sorte qu'après introduction du fluide réactif dans la plaque de pile à combustible (22, 400) le fluide réactif quitte la plaque de pile à combustible (22, 400) suivant deux directions différentes, les deux directions étant substantiellement perpendiculaires à la direction suivant laquelle le fluide réactif a été acheminé jusque dans la plaque de pile à combustible (22, 400).

13. Le procédé de la revendication 10, où la pluralité de deuxièmes voies de fluide sont agencées pour acheminer le fluide réactif jusque dans la plaque de pile à combustible (22, 400) suivant une direction substantiellement opposée à la direction suivant laquelle la pluralité de premières voies de fluide acheminent le fluide réfrigérant jusque dans la plaque de pile à combustible (22, 400),
où les premières voies de fluide sont agencées de sorte qu'après introduction du fluide réfrigérant à l'intérieur de la plaque de pile à combustible (22, 400) le fluide réfrigérant quitte la plaque de pile à combustible (22, 400) suivant au moins une direction substantiellement opposée à la direction suivant laquelle il a été acheminé jusque dans la plaque de pile à combustible (22, 400), et
où les deuxièmes voies de fluide sont agencées de sorte qu'après introduction du fluide réactif à l'intérieur de la plaque de pile à combustible (22, 400) le fluide réactif quitte la plaque de pile à combustible (22, 400) suivant au moins une direction substantiellement opposée à la direction suivant laquelle il a été acheminé jusque dans la plaque de pile à combustible (22, 400), facultativement
où les premières voies de fluide sont agencées pour acheminer le fluide réfrigérant jusque dans la plaque de pile à combustible (22, 400) par un premier côté de la plaque de pile à combustible (22, 400) vers un deuxième côté de la plaque de pile à combustible (22, 400) à l'opposé du premier côté et renvoyer le fluide réfrigérant vers le premier côté pour sortir de la plaque de pile à combustible (22, 400) par le premier côté, facultativement en outre
où une ou plusieurs entretoises (20, 102) sont configurées avec un conduit intégré de réactif définissant au moins une deuxième voie de fluide pour apporter un fluide réactif à l'au moins une plaque de pile à combustible (22, 400).

14. Le procédé des revendications 9 à 13, comprenant en outre la disposition d'une pluralité d'entretoises (20, 102) entre des plaques de pile à combustible (22, 400) adjacentes, facultativement où une ou plusieurs entretoises (20, 102) sont configurées avec un conduit intégré de réfrigérant définissant l'au moins une première voie de fluide, facultativement où les entretoises (20, 102) ont des points d'entrée et/ou de sortie de fluide pour acheminer les premières et/ou deuxièmes voies de fluide et/ou où le fluide réfrigérant est acheminé à un débit plus élevé que le fluide réactif.

15. La pile à combustible de n'importe lesquelles des revendications 1 à 9, ou le procédé de découplage d'écoulement de fluide réfrigérant dans une pile à combustible de n'importe lesquelles des revendications 9 à 14, où chaque plaque de pile à combustible (22, 400) comprend une carte de circuit imprimé, PCB *(Printed Circuit Board),* multicouche, facultativement où l'au moins une membrane perméable aux ions (10) de chaque plaque de pile à combustible (22, 400) est soudée à la PCB multicouche.
